(19) Europäisches Patentamt
European Patent Office
Office européen des brevets

(11) EP 4 251 672 B1

(12) EUROPEAN PATENT SPECIFICATION

(45) Date of publication and mention of the grant of the patent:
**24.09.2025 Bulletin 2025/39**

(21) Application number: **21820306.5**

(22) Date of filing: **26.11.2021**

(51) International Patent Classification (IPC):
***C08G 59/14*** *(2006.01)* ***C08G 59/40*** *(2006.01)*
***C08G 59/62*** *(2006.01)*

(52) Cooperative Patent Classification (CPC):
**C08G 59/623; C08G 59/1438; C08G 59/1444; C08G 59/4014**

(86) International application number:
**PCT/GB2021/053072**

(87) International publication number:
**WO 2022/112776 (02.06.2022 Gazette 2022/22)**

(54) **POLYMERIC MANNICH BASE, PREPARATION METHODS AND USE AS AN EPOXY RESIN CURATIVE**

POLYMERE MANNICHBASE, HERSTELLUNGSVERFAHREN UND VERWENDUNG ALS EPOXIDHARZHÄRTER

BASE DE MANNICH POLYMÈRE, PROCÉDÉS DE PRÉPARATION ET UTILISATION EN TANT QUE DURCISSEUR DE RÉSINE ÉPOXY

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2020 GB 202018745**

(43) Date of publication of application:
**04.10.2023 Bulletin 2023/40**

(73) Proprietor: **Jones, Paul**
**Wrightington WN6 9PS (GB)**

(72) Inventor: **Jones, Paul**
**Wrightington WN6 9PS (GB)**

(74) Representative: **Stott, Michael John**
**Mathys & Squire**
**The Shard**
**32 London Bridge Street**
**London SE1 9SG (GB)**

(56) References cited:
**US-A- 4 599 371** **US-A- 5 639 396**
**US-B1- 6 248 182**

- **JIANG-JEN LIN ET AL: "Synthesis and epoxy curing of Mannich bases derived from bisphenol A and poly(oxyalkylene)diamine", JOURNAL OF APPLIED POLYMER SCIENCE, vol. 78, no. 3, 1 January 2000 (2000-01-01), US, pages 615 - 623, XP055234680, ISSN: 0021-8995, DOI: 10.1002/1097-4628(20001017)78:3<615::AID-APP170>3.0.CO;2-N**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 251 672 B1

## Description

The invention relates to a polymeric Mannich base useful as an epoxy curative and/or accelerator. In particular the present invention is directed to a polymeric Mannich base comprising aromatic terminal groups linked by a hydrocarbyl polymeric backbone, an epoxy resin curative composition comprising the polymeric Mannich base, a cured epoxy resin obtainable using the composition, a process for preparing the polymeric Mannich base and uses thereof.

## BACKGROUND OF THE INVENTION

There is an array of cross-linking agents available for epoxy functional materials, but amines and products derived therefrom offer the greatest versatility for curing epoxy resins. Collectively, these materials offer the means for formulating systems that can provide the potential for curing in thin films and/or mass at a broad spectrum of temperatures. Historically, phenolic derived Mannich base curing agents have been used extensively. However, due to regulatory and toxicity issues, the use and availability of these materials is in substantial decline and focus is shifting to more environmentally friendly alternatives.

Many commercial curing agent formulations are based on aliphatic amines, including cyclo-aliphatic and araliphatic amines, as well as to a lesser extent aromatic amines, or a combination thereof. These amines are generally modified in order to enhance their processing and/or performance aspects, as well as to improve the active hydrogen equivalent weight combining ratio with epoxy resins or to reduce the toxicity of the amine curative agent.

Mannich bases are examples of modified amines which offer enhanced properties, especially with regard to improved compatibility with epoxy resins, optimisation of cure speed and degree of cure, as well as resistance to carbamation. Commercially available Mannich bases include phenolic derived compounds that are the reaction product of an aldehyde (generally formaldehyde), a phenolic compound, or a substituted derivative thereof, and an amine having primary or secondary amino groups. An example structure of a phenolic Mannich base is shown below:

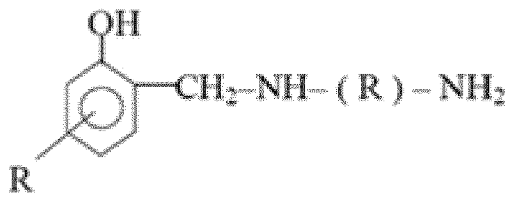

Phenolic Mannich Base

EP0779311 describes a Mannich base prepared by reacting (i) butyraldehyde, (ii) a phenolic compound, and (iii) a primary or a secondary polyamine. The use of butyraldehyde, rather than formaldehyde or paraformaldehyde, is reported to lower viscosity in the Mannich base products, which can be advantageous when used in epoxy curative applications.

US 6248182 describes compositions comprising epoxy-novolac resins containing a side chain substituent derived from bisphenol A, optionally functionalised with Mannich bases. Such compositions are useful in protective coatings to metal substrates for improved corrosion resistance and/or paint adhesion.

US 5639396 describes an oil soluble hydroxyaromatic polymer derived from Mannich reaction of (i) an aldehyde, (ii) a phenolic compound, and (iii) 1,2-alkylenediamine. This provides a polymeric form of a phenolic Mannich base that is useful as a lubricating oil additive.

Lin, J.-J., Lin, S.-F., Kuo, T.-T., Chang, F.-C. and Tseng, F.-P. (2000), Synthesis and epoxy curing of Mannich bases derived from bisphenol A and poly(oxyalkylene)diamine. J. Appl. Polym. Sci., 78: 615-623., describes a family of Mannich bases prepared from the reaction of bisphenol A, formaldehyde, and poly(oxyalkylene)diamines. The resulting product is a bisphenol A compound substituted with methylene-poly(oxyalkylene)diamine groups. These compounds are useful as epoxy resin curatives.

US 4599371 describes a process for preparing synthetic resins comprising aliphatic or aromatic epoxy resins, and phenolic compounds. The synthetic resins are self-curing when heated and are useful for preparing cathodic electrocoating finishes.

However, the molecular weight, polydispersity and residual free phenol monomer levels has led to the reduction in availability and a decline in popularity of this class of materials. The conventional Mannich base with residual free phenol carries both acute toxicity labelling and a chronic health hazard. The removal of several of the Hazard statements associated with free monomeric phenol and substituted phenols, is now mandated by some organisations, e.g. REACH [Registration, Evaluation, Authorisation and restriction of Chemicals]. There remains a need for alternative Mannich bases

that offer high process performance, broad compatibility with epoxy resins, and avoid the toxicity and environmental issues associated with known amine-derived epoxy resin curatives.

The present invention is based on the surprising discovery of a new class of polymeric Mannich base, finding particular application as an epoxy resin curative, which may derive from an aromatic polyol monomer, or a polymer/co-polymer thereof.

## BRIEF DESCRIPTION OF THE FIGURES

Figure 1 demonstrates the viscosity versus temperature of the polymeric Mannich base of Example 1;

Figure 2 demonstrates the isothermal viscosity increase of the polymeric Mannich base of Example 1 when combined with EPILOK (RTM) 60-600 (Bitrez Ltd);

Figure 3 demonstrates the dry times and cure times of the polymeric Mannich base of Example 1 at both 5 and 25 °C;

Figure 4 demonstrates the dry times and cure times of the polymeric Mannich base of Example 3 at both 5 and 25 °C; and

Figure 5 demonstrates the viscosity versus temperature of the polymeric Mannich base of Example 1.

## SUMMARY OF THE INVENTION

In one aspect, the present invention provides a method of preparing a polymeric Mannich base for use as an epoxy resin curative and/or accelerator, said method comprising:

i) providing:

a) a polymer comprising aromatic terminal groups linked by a hydrocarbyl polymeric backbone, wherein each of the aromatic terminal groups comprises a ring substituted with at least one activating group and at least one unsubstituted ring atom, wherein the one or more activating groups is capable of activating the aromatic terminal group to undergo electrophilic aromatic substitution at the at least one unsubstituted ring atom; wherein the aromatic terminal groups are bonded to the hydrocarbyl polymeric backbone through an ether, ester, amine, amide, thioether, or thioester group;
b) a primary or secondary monoamine and/or a polyamine comprising primary and/or secondary amino groups, and
c) an aldehyde; and

ii) performing a Mannich reaction using components a) to c), wherein each aromatic terminal group of the polymer is converted to a Mannich base.

In another aspect, the present invention provides a polymeric Mannich base as described herein, preparable or prepared by the methods described herein.

In a further aspect, the present invention comprises an epoxy resin curative composition comprising the polymeric Mannich base, as described herein.

In yet a further aspect, the present invention provides an epoxy resin curative composition comprising the polymeric Mannich base derived from the methods described herein.

In still a further aspect, the present invention provides a method for preparing a cured epoxy resin, said method comprising:

a) contacting an epoxy resin with a polymeric Mannich base as described herein; and
b) forming a cured epoxy resin.

In a still further aspect, the invention provides a cured epoxy resin prepared, or preparable, by the methods described herein.

In another aspect, the present invention provides the use of an aromatic monomer comprising one or more activation groups as defined herein and a nucleophilic group as defined herein for forming a polymeric Mannich base as

defined herein.

In another aspect, the present invention provides the use of a polymeric Mannich base as defined herein for crosslinking an epoxy resin.

## DETAILED DESCRIPTION

The present invention relates to a hitherto unknown class of curing agent for epoxy resin compositions that offers desirable cured epoxy performance preparable with substantially no residual toxic materials. The novel epoxy curing agents of the invention may be prepared via several different methods that are analogous to those employed in conventional phenol-based Mannich base reactions. The process is readily adaptable and can be readily integrated into epoxy curative preparation systems used for producing conventional epoxy curatives.

For ease of reference, the polymer comprising aromatic terminal groups linked by a hydrocarbyl polymeric backbone referred to in step i) outlined above is hereinbelow referred to as "polymer a)", unless otherwise indicated. The primary or secondary monoamine and/or a polyamine comprising primary and/or secondary amino groups referred to in step i) outlined above is hereinbelow referred to as "amine b)", unless otherwise indicated. The aldehyde referred to in step i) outlined above is hereinbelow referred to as "aldehyde c)", unless otherwise indicated.

The polymeric Mannich base may be prepared via generation of polymer a). Polymer a) may be formed by reaction of an aromatic monomer with a hydrocarbyl polymeric backbone precursor, such as an epoxy resin. Polymer a) subsequently undergoes a Mannich reaction with amine b) and aldehyde c) to form the polymeric Mannich base.

The term "aromatic monomer" as used herein refers to an aromatic carbocyclic ring system containing from 6 to 14 ring carbon atoms. As will be appreciated, reference to monomer means that the it does not form, for instance, a part of a repeating unit in a polymeric system. Examples of aromatic monomers include those containing from 6 to 10 ring carbon atoms, e.g. 6 ring carbon atoms. The aromatic monomer includes monocyclic aromatic ring systems or polycyclic ring systems containing two or more rings, at least one of which is aromatic. Examples of aromatic monomers include analogues of phenyl, benzyl, naphthyl, fluorenyl, azulenyl, indenyl, anthryl and the like, having the required functionalisation (i.e. with activating group(s) and nucleophilic group(s)), as described herein.

The term "aromatic terminal group" as used herein refers to an aromatic carbocyclic ring system containing from 6 to 14 ring carbon atoms that is bonded to the hydrocarbyl polymeric backbone of polymer a), typically at one end of the polymer chain of the backbone. As with the aromatic monomer from which the aromatic terminal group may derive, the aromatic terminal group includes monocyclic aromatic ring systems or polycyclic ring systems containing two or more rings, at least one of which is aromatic. Examples of aromatic monomers include analogues of phenyl, benzyl, naphthyl, fluorenyl, azulenyl, indenyl, anthryl and the like, having the required functionalisation (i.e. with activating group(s) and a linker to the polymeric hydrocarbyl backbone), as described herein.

The term "polymeric hydrocarbyl backbone" as used herein (and described in more detail below in reference to Schemes 1 and 2) refers to a divalent polymer or co-polymer comprising a repeating unit of an aromatic and/or an aliphatic group formed predominantly of carbon and hydrogen atoms. The polymeric hydrocarbyl backbone is bonded (e.g. via linker groups) to two aromatic terminal groups, as described herein, typically at each end of a linear polymer chain of the polymeric hydrocarbyl backbone (although one or more additional aromatic terminal groups may in some cases be adducted on to side chains of the polymeric hydrocarbyl backbone). The aromatic monomer useful in the preparation of polymer a) comprises at least one nucleophilic group selected from an amino, hydroxy, or thiol groups, at least one activating group, and at least one unsubstituted ring atom, and may, for example, be a monocyclic or a polycyclic ring system. In the case of a polycyclic ring system, the at least one nucleophilic group selected from an amino, hydroxy, or thiol group, and the at least one activating group may be present on either a single ring, or across multiple rings. In some embodiments, each of the aromatic monomers consists of a single ring system or a bicyclic ring system.

The at least one nucleophilic group of the aromatic monomer may take part in a reaction to form an adduct of the aromatic monomers and the hydrocarbyl polymeric backbone precursor, as part of the formation of polymer a). As will be appreciated, as the at least one nucleophilic group is selected from an amino, hydroxy, or thiol group, the nucleophilic group may also having an activating effect on the ring system in the same manner as an activating group, although the principal utility of the nucleophilic group is to enable a coupling reaction with the hydrocarbyl polymeric backbone precursor as part of the formation of polymer a). Nevertheless, in some embodiments, the at least one activating group and the at least one nucleophilic group may be selected from the same functional groups (although one substituent on the ring cannot simultaneously be the at least one activating group and the at least one nucleophilic group).

Suitable aromatic monomers comprising at least one nucleophilic group, at least one activating group, and at least one unsubstituted ring atom, may be selected from polyhydric phenols such as resorcinol, hydroquinone, catechol, or a benzenetriol (for example, phloroglucinol, hydroxyquinol or pyrogallol); a phenylenediamine (for example, 1,2-phenylenediamine, 1,3-phenylenediamine or 1,4-phenylenediamine); a benzenetriamine (for example, benzene-1,2,3-triamine, benzene-1,2,4-triamine or benzene-1,3,5-triamine); a benzenedithiol (for example 1,2-benzenedithiol, 1,3-benzenedithiol or 1,4-benzenedithiol); a benzenetrithiol (for example 1,2,3-benzenetrithiol, 1,2,4-benzenetrithiol or 1,3,5-benzenetrithiol); an aminophenol (for example, 2-aminophenol, 3-aminophenol or 4-aminophenol); a mercaptophenol (for example, 2-mercaptophenol, 3-mercaptophenol or 4-mercaptophenol); an aminothiophenol (for example 2-aminothiophenol, 3-aminothiophenol or 4-aminothiophenol); or *N*-, *O*-, and/or *S*- substituted analogues of any of these, wherein one or more of the N, O, and/or S atoms is substituted with $C_1$ to $C_{20}$ hydrocarbyl, provided that at least one of the *N*-, *O*-, and/or *S*- substituents has at least one unsubstituted position (i.e substituted by hydrogen); and substituted analogues thereof comprising, in addition to the hydroxy, amino and/or thiol groups, one or more ring substituents selected from halogen and $C_1$ to $C_{20}$ hydrocarbyl.

In preferred embodiments, the aromatic monomer is selected from a polyhydric phenol, a phenylenediamine, an aminophenol, or substituted analogues thereof, more preferably selected from a polyhydric phenol or substituted analogue thereof. In particularly preferred embodiments, the aromatic monomer is resorcinol or a substituted analogue thereof. Most preferably, the aromatic monomer is resorcinol. In this case, as will be appreciated, one of the hydroxy groups corresponds to the nucleophilic group responsible for reaction with the hydrophobic polymeric backbone precursor, and the other hydroxy group corresponds to an activating group which is retained on the ring following formation of polymer a).

As would be appreciated, unsubstituted positions on aromatic systems (i.e. substituted by hydrogen) are capable of acting as nucleophiles in electrophilic aromatic substitution reactions. Substituents on the aromatic ring may impact both the reactivity of the ring system with regard to electrophilic aromatic substitution and the regioselectivity of the electrophilic aromatic substitution. Activating groups are substituents that increase the nucleophilicity of unsubstituted positions on the ring system. Activating groups are typically also electrophilic aromatic directing groups which encourage selectivity of electrophilic aromatic substitution at the positions *para-* and *ortho-* to the activating/electrophilic aromatic directing group. As would be appreciated, the directing properties of an electrophilic aromatic directing group may differ depending on the number of atoms in the specific ring system and the skilled person would understand how each electrophilic aromatic directing group may contribute to selectivity and reactivity in any given aromatic ring system.

When more than one activating group is present, the activating effects of the groups are additive, leading to even greater nucleophilicity of the ring system. When two or more electrophilic aromatic directing groups are present, the directing effects of each electrophilic aromatic directing group is combined such that when more than one electrophilic aromatic directing group directs towards the same position on the ring, this position is especially favoured for electrophilic aromatic substitution. Activating groups typically also act as electrophilic aromatic directing groups directing towards the *ortho-* and *para-* positions. Therefore, it is preferable that the aromatic monomer, when consisting of a single ring system, is substituted with activating groups (including the at least one nucleophilic group) at the 1- and 3-positions, or the 1-, 3-, and 5-positions. As the skilled person will appreciate, activating groups may be present on aromatic monomers consisting of bicyclic ring systems. For instance, on a naphthyl bicyclic ring, the 1-, 4-, 5- and 8-, or "alpha" positions are generally more reactive with regard to electrophilic aromatic substitution than the 2-, 3-, 6-, and 7-, or "beta" positions. An alpha activating/electrophilic aromatic directing group will direct electrophilic aromatic substitution towards the 2-, 4-, 5- and 7- positions. A beta activating/electrophilic aromatic directing group will direct electrophilic aromatic substitution towards the 1-, 3-, 6- and 8- positions. Therefore, it is preferable that a bicyclic naphthyl aromatic monomer is substituted with activating groups (including the at least one nucleophilic group) at either: any combination of the 1-, 4-, 5- and 8-, or "alpha" positions; or at any combination of the 2-, 3-, 6-, and 7-, or "beta" positions.

Having activating groups on the aromatic monomer means that activating groups will typically be retained on the aromatic terminal groups of polymer a), formed from reaction of the aromatic monomer and the hydrocarbyl polymeric backbone, or precursor thereof. Nucleophilic groups selected from an amino, hydroxy, or thiol group (which also have an activating effect on the ring system) may be modified by the reaction to form polymer a), including, for instance, in forming a linker group to the polymeric backbone of polymer a). Typically, the linker formed due to formation of polymer a) also retains an activating effect on the ring system. For example, having at least two hydroxy groups present on the aromatic monomer allows one hydroxy group to be retained intact (i.e. the activating group) whilst the other hydroxy group is converted to an ether or ester linker group (i.e. the nucleophilic group) upon reaction with the hydrocarbyl polymeric backbone, or precursor thereof, as part of the reaction to form polymer a). The resulting activating groups present on the aromatic terminal groups of polymer a) provide increased nucleophilicity allowing the aromatic terminal group to act as an effective nucleophile in the subsequent Mannich reaction in step ii). In contrast, an aromatic monomer including only a single nucleophilic group (e.g. phenol) for forming a linker group to the hydrocarbyl polymeric backbone, in the absence of any further activating groups, may not provide an aromatic terminal group that is sufficiently nucleophilic to effectively take part in the subsequent Mannich reaction.

Unless specified otherwise, the term activating group herein refers to any substituent that increases the reactivity of the ring towards electrophilic aromatic substitution. Examples of substituents that act as activating groups and electrophilic aromatic directing groups are listed below in Table 1. With regard to Table 1, R may be independently selected from either H or a $C_1$ to $C_{10}$ hydrocarbyl group, as defined hereinbelow, preferably, R may be selected from either H or a $C_1$ to $C_{10}$ alkyl group, more preferably, R may be selected from either H or a $C_1$ to $C_6$ alkyl group.

**Table 1:** activating and electrophilic aromatic directing groups

| Group | Structure | Activating and Directing Strength |
|---|---|---|
| Amine | $-NR_2$ | Strong |
| Hydroxy | -OH | Strong |
| Alkoxy | -OR | Strong |
| Acyloxy | -O(CO)R | Moderate |
| Acylamido | -NR(CO)R | Moderate |
| Thiol | -SH | Moderate |
| Alkylthio | -SR | Moderate |
| Phosphine | $-PR_2$ | Moderate |
| Aryl | -Ar | Weak |
| Alkynyl | -C≡CR | Weak |
| Vinyl | $-CR=CR_2$ | Weak |
| Alkyl | $-CR_3$ | Weak |
| Silyl | $-SiR_3$ | Weak |

In some embodiments, the one or more activating groups used in the present invention may be independently selected from $-NR_2$, -OR, -O(CO)R, -NR(CO)R, -SR, $-PR_2$, - C=CR, $-CR=CR_2$, $-CR_3$ or $-SiR_3$, wherein R is independently selected from H or a $C_1$ to $C_{10}$ hydrocarbyl group, preferably wherein R is independently selected from H or a $C_1$ to $C_{10}$ alkyl group, more preferably wherein R is independently selected from H or a $C_1$ to $C_6$ alkyl group.

In some embodiments, the one or more activating groups used in the present invention may be independently selected from $-NR_2$, -OR, -O(CO)R, -NR(CO)R, -SR or $-PR_2$, wherein R is independently selected from H or a $C_1$ to $C_{10}$ hydrocarbyl group, preferably wherein R is independently selected from H or a $C_1$ to $C_{10}$ alkyl group, more preferably wherein R is independently selected from H or a $C_1$ to $C_6$ alkyl group.

In some embodiments, the one or more activating groups used in the present invention may be independently selected from $-NR_2$, -OR, -O(CO)R or -NR(CO)R, wherein R is independently selected from H or a $C_1$ to $C_{10}$ hydrocarbyl group, preferably wherein R is independently selected from H or a $C_1$ to $C_{10}$ alkyl group, more preferably wherein R is independently selected from H or a $C_1$ to $C_6$ alkyl group.

In some embodiments, the one or more activating groups used in the present invention may be independently selected from $-NR_2$ or -OR, wherein R is independently selected from H or a $C_1$ to $C_{10}$ hydrocarbyl group, preferably wherein R is independently selected from H or a $C_1$ to $C_{10}$ alkyl group, more preferably wherein R is independently selected from H or a $C_1$ to $C_6$ alkyl group.

In preferred embodiments, the one or more activating groups used in the present invention may be -OH.

The activating properties of an activating group derive from their ability to donate electrons into an aromatic system, thus enhancing its affinity towards electrophiles, i.e. activating groups are electron donating groups. The degree of electron donation of an electron donating group is proportional to its strength as an activating group. These properties can be determined in relation to a specific substituent using the Hammett equation:

$$\sigma = \log K_X - \log K_H$$

$K_H$ is the ionisation constant for benzoic acid in water at 25 °C and $K_X$ is the ionisation constant in water at 25 °C for a benzoic acid substituted with the electron donating group in question. σ is the Hammett substituent constant, the more negative the Hammett substituent constant is, the more electron donating the substituent is, and therefore the stronger an activating group the substituent is. The Hammett substituent constant can thus be used to measure the strength of an activating group.

The Hammett substituent constant of a substituent will differ depending on its position on the benzoic acid (e.g. *-para, -meta or -ortho*), the *-para, -meta and -ortho* Hammett substituent constants thus represent the activating effect the substituent has on the position *-para, -meta or -ortho* to the substituent, respectively. Hammett substituent constants for substituents at the *-ortho* position cannot be accurately experimentally calculated due to the interference of steric effects. However, *-ortho* Hammett substituent constants can be estimated using density functional theory and are found to closely correspond to the *-para* Hammett substituent constants. Hammett substituent constants of an electron donating group at

the *-meta* position tend to be significantly smaller than those at the *-para* and *-ortho* positions, which gives rise to the preferentially *-ortho* and *- para* regioselective directing effects of activating groups. *-Meta* Hammett substituent constants are thus of little relevance to electrophilic aromatic substitution.

The Hammett substituent constant ($\sigma$) herein refers to the Hammett substituent constant of the substituent in question at the *-para* position, which is approximately equivalent to the Hammett substituent constant at the *-ortho* position and corresponds to the increase in reactivity of the aromatic ring with regard to electrophilic aromatic substitution at both the *-para* and *-ortho* positions. As would be appreciated, a more negative Hammett substituent constant corresponds to an increase in reactivity.

Literature values of Hammett substituent constants for common substituents would be known to the skilled person and can be found by reference to textbooks, for example, Hansch. C, Leo. A, Substituent constants for correlation analysis in chemistry and biology, New York NY: Wiley, 1979. Hammett substituent constants could also be easily measured by the skilled person by methods known in the art, see Hammett. P, The Effect of Structure upon the Reactions of Organic Compounds. Benzene Derivatives, J. Am. Chem. Soc., 1937, 59, 1, 96-103 and Hansch. C et al A Survey of Hammett Substituent Constants and Resonance and Field Parameters, Chem. Rev., 1991, 91, 165-195.

Table 2 provides examples of Hammett substituent constants, as reported by Hammett. P, The Effect of Structure upon the Reactions of Organic Compounds. Benzene Derivatives, J. Am. Chem. Soc., 1937, 59, 1, 96-103 and Hansch. C et al A Survey of Hammett Substituent Constants and Resonance and Field Parameters, Chem. Rev., 1991, 91, 165-195, as well as Hansch. C, Leo. A, Substituent constants for correlation analysis in chemistry and biology, New York NY: Wiley, 1979. As described hereinabove, Hammett Substituent constants reported in Table 2 are the para Hammett Substituent Constants.

**Table 2:** Hammett substituent constants

| **Group** | **Structure** | **Hammett Substituent Constant ($\sigma$)** |
|---|---|---|
| Dimethyl amine | $-NMe_2$ | -0.830 |
| Primary amine | $-NH_2$ | -0.660 |
| Hydroxy | -OH | -0.370 |
| Methoxy | -OMe | -0.268 |
| Ethoxy | -OEt | -0.250 |
| Methyl | $-CH_3$ | -0.170 |
| Benzyl | $-CH_2C_6H_5$ | -0.090 |
| Trimethyl silyl | $-SiMe_3$ | -0.070 |
| Phenyl | $-C_6H_6$ | -0.010 |

In some embodiments, the one or more activating groups present on the aromatic terminal groups of polymer a), or on the aromatic monomers useful in the preparation thereof are independently selected from the activating groups listed hereinabove and/or in Table 1. In some embodiments, each of the aromatic terminal groups of polymer a), or the aromatic monomers useful in the preparation (in addition to the at least one nucleophilic group of the aromatic monomer / the linker group attaching the aromatic terminal group to the polymeric backbone), comprise two activating groups, preferably two activating groups independently selected from the activating groups listed hereinabove and/or in Table 1. Preferably, where there are two activating groups present, these are
in a 1-, 3-, 5-substitution pattern, with the nucleophilic group selected from an amino, hydroxy, or thiol group (in the case of a monocyclic 6-membered aromatic monomer ring system) or with the linker group (in the case of a 6-membered terminal aromatic group ring system in polymer a)).

Where the aromatic monomer / aromatic terminal group consists of a bicyclic ring system, such as naphthyl, the aromatic monomer / aromatic terminal group comprises a nucleophilic group / linker group, and one or more activating groups, preferably independently selected from the activating groups listed hereinabove and/or in Table 1, at either any combination of the 1-, 4-, 5- and 8-, or "alpha" positions; or at any combination of the 2-, 3-, 6-, and 7-, or "beta" positions.

The activating/directing effects deriving from the nature of the aromatic monomer useful in the preparation of polymer a) have been found to be especially advantageous where the aromatic monomer is resorcinol. Resorcinol is benzene-1,3-diol and the 1,3-substitution pattern results in one of the *ortho-* positions of the first hydroxy group also being in the *para-* position to the second hydroxy group, and vice versa, thus making these positions very favourable for electrophilic aromatic substitution. The position between the two hydroxy groups that is *ortho-* to both hydroxy groups, is generally less favoured for electrophilic aromatic substitution due to steric effects. This serves to maximise both reactivity

and selectivity of electrophilic aromatic substitution at the above-mentioned *para*- positions.

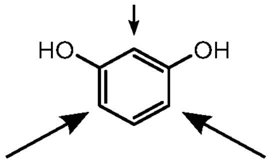

Resorcinol showing the favoured and less favoured positions for electrophilic aromatic substitution

When resorcinol is used in the preparation of polymer a), one of the aromatic hydroxy groups may be converted, for instance, to an aromatic ether or aromatic ester linker group (in forming the attachment to the hydrocarbyl polymeric backbone), as part of the preparation of polymer a). However, as will be appreciated from the relative strengths of the different activating groups mentioned in Table 1 (in particular hydroxy, alkoxy and acyloxy groups), similar activating and electrophilic aromatic directing properties of resorcinol will be retained in the aromatic terminal groups formed in polymer a). These properties may then exert effects in the subsequent Mannich reaction and the location of electrophilic aromatic substitution on the aromatic ring of the aromatic terminal group.

In addition to the above benefits, resorcinol also has an advantageous safety profile and is compatible with REACH (Registration, Evaluation, Authorisation and restriction of Chemicals) regulations. In particular, free residual resorcinol left over from the preparation of polymer a) is also eliminated by preferential reaction of resorcinol with excess iminium formed as part of the Mannich reaction in step ii), as a result of its increased reactivity over polymer a). As will be appreciated, these advantages extend to alternative aromatic monomers comprising one or more activating groups, in addition to a nucleophilic group intended for reaction with the hydrocarbyl polymeric backbone, which thus have comparable reactivity. Therefore, the polymeric Mannich base can be prepared whilst avoiding the use of toxic substances (for example, phenol) thereby improving the safety rating of materials obtained therefrom.

The hydrocarbyl polymeric backbone of the polymer a) can be prepared from a hydrocarbyl polymeric backbone precursor. The hydrocarbyl polymeric backbone precursor may include a plurality of electrophilic groups, for example epoxides, carboxylic acids, acyl halides, esters, alkyl halides, alkyl sulphonates, and/or alkenes. In some embodiments, the hydrocarbyl polymeric backbone precursor may be an epoxy resin.

Reference to a "hydrocarbyl polymeric backbone" herein (incorporating the "$R^2$" group represented in Scheme 1 below) refers to a divalent polymer or co-polymer comprising a repeating unit of an aromatic and/or an aliphatic group formed predominantly of carbon and hydrogen atoms. The repeating unit may be optionally substituted by one or more groups that are preferably selected from hydroxyl (-OH) groups, carboxylic acid groups, $C_1$ to alkoxy, $C_2$ to $C_8$ alkoxyalkoxy, $C_3$ to $C_6$ cycloalkyl, $-CO_2(C_1$ to $C_6)$alkyl, and - $OC(O)(C_1$ to $C_6)$alkyl. Additionally or alternatively, one or more of the carbon atoms, and any substituents attached thereto, of the hydrocarbyl polymeric backbone may be replaced with an oxygen atom (-O-), provided that the oxygen atom is not bonded to another heteroatom.

The hydrocarbyl polymeric backbone may be entirely aliphatic, for example an aliphatic polyether, or it may be a combination of aliphatic and aromatic portions, for example novolacs and bisphenols (A or F) or halogenated analogues thereof. In some examples, the hydrocarbyl polymeric backbone includes a branched aliphatic chain which is substituted by one or more aromatic groups, for example a polyvinyl phenol.

Electrophilic groups on a hydrocarbyl polymeric backbone precursor may be reacted with the aromatic monomer comprising at least one nucleophilic group selected from an amino, hydroxy, or thiol group, and at least one additional activating group in order to prepare polymer a), as represented below in Scheme 1. $R^1$ represents the at least one additional activating group, and Nu represents the at least one nucleophilic group selected from an amino, hydroxy, or thiol group. As would be appreciated, the nitrogen, oxygen or sulphur atom of the Nu group proceeds to form part of the linker between the aromatic terminal group and the hydrocarbyl polymeric backbone of polymer a). The nitrogen, oxygen or sulphur atom of the Nu group having formed part of the linker in polymer a) is represented by "X" in Scheme 1 below. $R^2$ represents all or a part of the hydrocarbyl polymeric backbone of polymer a). $R^2$ in this representation does not include the functional groups responsible for linking the polymeric backbone to the aromatic terminal groups, deriving from electrophilic groups (e.g. terminal epoxide functional groups) in the polymeric backbone precursor and a nucleophilic group selected from an amino, hydroxy, or thiol group on each of the aromatic monomers.

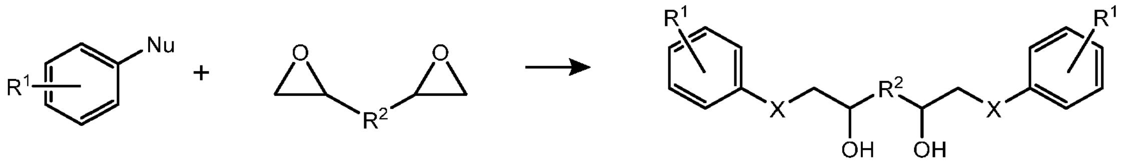

**Scheme 1**: Synthesis of polymer a)

In further regard to Scheme 1, the one or more additional activating groups, represented by $R^1$, may be at any position or combination of positions on the aromatic monomer ring provided that at least one ring position is left unsubstituted (i.e. substituted with hydrogen). Preferably, the additional activating group is at the 3- or 5-position with regard to the nucleophilic group, represented by Nu. $R^1$ may be defined as any functional group that increases the reactivity of the ring towards electrophilic aromatic substitution or as any one of the activating substituents listed hereinabove, and/or defined in Table *1,* e.g. an amine, alcohol, ether, ester, amide, thiol, thioether, phosphine, alkene, alkyne, alkane, or silane, optionally substituted with one or more $C_1$ to $C_{10}$ hydrocarbyl groups, as defined hereinbelow, or preferably, one or more $C_1$ to $C_{10}$ alkyl group, more preferably, one or more $C_1$ to $C_6$ alkyl groups.

Although Scheme 1 depicts a monocyclic (phenyl) ring system for the aromatic monomer, polycyclic ring systems are possible for the aromatic monomer, such as a bicyclic ring system (e.g. naphthyl). In a six-membered ring, for instance, there may be from 1 to 4 $R^1$ groups present on the aromatic monomer. In a ten-membered bicyclic ring, for instance, there may be from 1 to 6 $R^1$ groups present on the aromatic monomer. Although Scheme 1 depicts epoxide groups on the hydrocarbyl polymeric backbone precursor, the hydrocarbyl polymeric backbone precursor may instead comprise alternative electrophilic groups, for example, carboxylic acids, acyl halides, esters, alkyl halides, alkyl sulphonates, or alkenes. Furthermore, although Scheme 1 depicts the hydrocarbyl polymeric backbone being linked to the aromatic terminal groups by beta-hydroxy ethers as a result of the epoxide opening, it would be appreciated that other linkers between the aromatic terminal group and the hydrocarbyl polymeric backbone may be formed depending on the nature of the nucleophilic group on the aromatic monomer and the electrophile present on the hydrocarbyl polymeric backbone precursor.

The nucleophilic group on the aromatic monomer is selected from an amino, hydroxy, or thiol group and is represented in Scheme 1 as Nu. If the nucleophilic group is a hydroxy group, the resulting linker between the aromatic terminal group and the hydrocarbyl polymeric backbone will, for instance, be an ether or ester group. If the nucleophilic group is an amine group, the resulting linker between the aromatic terminal group and the hydrocarbyl polymeric backbone will, for instance, be an amine or amide group. If the nucleophilic group is a thiol group, the resulting linker between the aromatic terminal group and the hydrocarbyl polymeric backbone will, for instance, be a thioether or thioester group.

Preferably, preparation of polymer a) comprises an epoxy-fusion step in which an aromatic monomer comprising a ring substituted with at least one nucleophilic substituent selected from an amino, hydroxy, or thiol group, preferably wherein the nucleophilic substituent is a hydroxy group, and with at least one additional activating group, and at least one unsubstituted ring atom is reacted with an epoxy resin comprising terminal epoxy functional groups in the presence of a catalyst, for example, amines, imidazoles, such as phenylimidazole, a phosphonium halide salt such as tetrabutyl phosphonium bromide, tetramethyl phosphonium bromide, tetraphenyl phosphonium chloride, ethyltriphenylphosphonium iodide, or ethyltriphenylphosphonium bromide a quaternary ammonium halide salt such as tetrabutyl ammonium bromide or tetramethyl ammonium chloride, or a Lewis acid catalyst, such as titanium isopropoxide, aluminium trichloride, Dichloro(methyl)aluminium, aluminium tribromide, iron trichloride, iron tribromide, titanium tetrachloride, tin tetrachloride, yttrium trichloride, boron trifluoride, boron trichloride, zinc dichloride, trimethyl borane, or a metal-$BF_4$ salt, or a hydroxide salt, such as lithium hydroxide, sodium hydroxide, potassium hydroxide or caesium hydroxide in order to provide polymer a).

The polymeric Mannich base is prepared by reaction of the polymer a) with amine b) and aldehyde c), as shown below in Scheme 2.

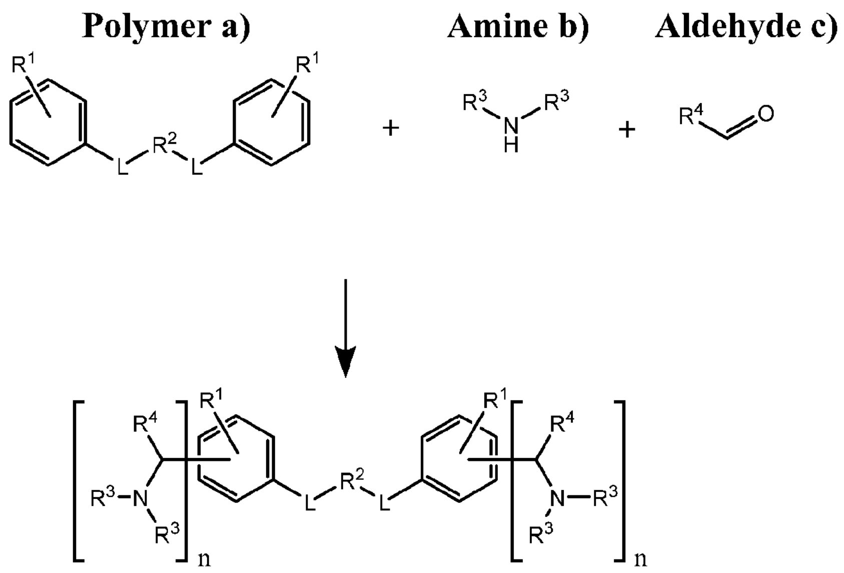


**Scheme 2**: Synthesis of Polymeric Mannich Base

$R^1$ and $R^2$ in Scheme 2 are as defined in Scheme 1 hereinabove. $R^1$ may be at any position or combination of positions on the aromatic monomer ring, provided that at least one position is left unsubstituted (i.e. substituted with hydrogen) on the aromatic terminal groups of polymer a). Preferably, $R^1$ is at the 3- or 5-position with regard to L. $R^1$ may be defined as any functional group that increases the reactivity of the ring towards electrophilic aromatic substitution or as any one of the activating substituents listed hereinabove, and/or defined in Table 1, *e.g.* an amine, alcohol, ether, ester, amide, thiol, thioether, phosphine, alkene, alkyne, alkane, or silane, optionally substituted with one or more $C_1$ to $C_{10}$ hydrocarbyl groups, as defined hereinbelow, or preferably, one or more $C_1$ to $C_{10}$ alkyl group, more preferably, one or more $C_1$ to $C_6$ alkyl groups. $R^3$ is a hydrocarbyl group as defined hereinbelow with regard to amine b), or one of the $R^3$ groups is hydrogen, allowing for amine b) to be either a primary or secondary amine. $R^4$ is hydrogen or a hydrocarbyl group as defined hereinbelow with regard to aldehyde c).

As would be appreciated, the Mannich reaction may occur at any suitable position on the aromatic terminal group of polymer a) depending on its substituents and the Mannich reaction may occur any number of times per aromatic terminal group up to the number of unsubstituted positions on the aromatic terminal group. As at least one unsubstituted position is required on the aromatic terminal group, the polymeric Mannich base formed by the methods described herein will have at least one substituent derived from amine b) and aldehyde c). The number of substituents derived from amine b) and aldehyde c) present on each aromatic terminal group is defined by n, wherein n ranges from 1 to the number of unsubstituted positions on the aromatic terminal group. Selectivity will depend on the nature and substitution of the aromatic terminal group and could be determined by those skilled in the art.

Where each terminal group comprises a plurality of unsubstituted ring atoms (i.e. positions substituted by hydrogen), a plurality of Mannich reactions may occur on each aromatic terminal group. A distribution of different polymeric Mannich bases may therefore be produced in some embodiments. As would be appreciated, the extent to which multiple Mannich reactions may occur on individual aromatic terminal groups will be affected by the stoichiometry of the reagents employed and sterics, for instance.

For the avoidance of doubt, reference herein to a Mannich reaction refers to reaction of the aromatic terminal group of polymer a) with an iminium formed from amine b) and aldehyde c), or to any other reaction of the aromatic terminal group of polymer a), amine b) and aldehyde c) in order to yield a polymeric Mannich base as defined herein.

L in Scheme 2 above represents a linker through which the aromatic terminal groups are bonded to the hydrocarbyl polymeric backbone through an ether, ester, amine, amide, thioether, or thioester group. It would be appreciated that the exact structure of L depends on the nature of the electrophile present on the hydrocarbyl polymeric backbone precursor and the nucleophile present on the aromatic monomer, for example, L is a beta-hydroxy ether linker ($-O-CH_2-CHOH-R^2$) if polymer a) is prepared via epoxide opening wherein the aromatic monomer comprises a hydroxy group as the nucleophilic group. Although the above structure depicts monocyclic (phenyl) ring systems for the aromatic terminal groups, polycyclic ring systems are possible for the terminal group, such as a bicyclic ring system (e.g. naphthyl). Although the above structure depicts the - $CHR^4-CNR^3_2$ substituent as *-para* to L, it would be appreciated that the $-CHR^4-CNR^3_2$ substituent may be at any position, depending on the position(s) of the activating group(s).

The Mannich reaction involves the reaction of polymer a), amine b) and aldehyde c). Multiple synthetic routes are possible for reaction of these three components in forming the Mannich base, depending on the order of addition of the

reactants. The skilled person is able to select a suitable stoichiometry of reagents depending on the synthetic route adopted. Typically the amine b) and aldehyde c) would be present in molar excess relative to polymer a), and stoichiometry may be readily modified to account for the presence of any residual aromatic monomer and also to account for the extent of the Mannich reactions desirable on each of the aromatic terminal groups. An example stoichiometric ratio of amine b) to polymer a) is 2:1 to 20:1.

Optionally, preparing a polymeric Mannich base is achieved via the Betti reaction which comprises a condensation reaction between amine b) and aldehyde c), prior to reaction with polymer a). Condensation reaction between the amine b) and aldehyde c) provides an iminium ion which may then act as the electrophile in an electrophilic aromatic substitution reaction.

Optionally, preparing a polymeric Mannich base comprises a reaction between the polymer a) and aldehyde c) to form an alcohol intermediate, prior to reaction with amine b) to form the polymeric Mannich base.

When the reaction between polymer a) and amine b) is performed in the presence of aldehyde c), aldehyde c) may be added, either continuously over a period, or incrementally, to the reaction mixture. Alternatively or additionally, amine b) may be pre-reacted/pre-modified with aldehyde c), prior to contact with polymer a). For instance, amine b) and aldehyde c) can be pre-reacted to generate the corresponding iminium compound which may further react with polymer a).

When amine b) is modified by a condensation reaction with aldehyde c), or reacted in the presence of aldehyde c) in accordance with embodiments described herein, a typical molar ratio of aldehyde c) to amine b) is from 0.1: 1 to 10: 1, preferably 0.5:1 to 5:1, more preferably from 1:1 to 3:1.

As part of the method, water that is formed from the condensation with aldehyde c) is typically removed by distillation. Alternatively or additionally, the product can be further purified by distillation to further reduce the amount of free amine b) and/or any added solvent.

Optionally, the method may further comprise the step of modifying the Mannich base obtained by the methods disclosed herein by a further condensation reaction with a further aldehyde and/or ketone.

Preferably amine b) may comprise a carbon chain that is branched or linear, cycloaliphatic, araliphatic, aromatic with ether groups present, and may include substitution with other functional or non-functional materials.

In preferred embodiments, amine b) is a monoamine wherein the monoamine is selected from alkyl monoamines, alkanolamines and poly(alkylene oxide) amines.

Amine b) may be a primary monoamine. Specific examples of suitable primary monoamines include allylamine; benzylamine; ethanolamine; isopropanolamine; 3-amino-1-propanol; 3-ethoxypropylamine; 3-propoxypropylamine; 3-isopropoxypropylamine; 2-(2-aminoethoxy)ethanol; 3-(dimethylamino)propylamine, 3-(diethylamino)propylamine; 1-(3-aminopropyl) imidazole; cyclohexylamine; 3-(aminomethyl)pyridine; 2-aminopyridine; 2,4-diethylaniline; 2,6-diethylaniline; 2-aminopyrimidine.

Amine b) may be a poly(alkylene oxide) amine. Specific examples of suitable poly(alkylene oxide) amines are the Jeffamine (RTM) M-600, Jeffamine (RTM) M-1000, Jeffamine (RTM) M-2005, and Jeffamine (RTM) M-2070 amines. Specific examples of suitable diamines are Jeffamine (RTM) D-2000, Jeffamine (RTM) ED-600, Jeffamine (RTM) ED-900, and Jeffamine (RTM) ED-2001 amines, available from Huntsman corporation.

In general, amine b) employed in the present invention can be any amine containing a single or multiple primary or secondary amino groups, respectively, including compounds that may also additionally contain tertiary amino groups. Monoamines useful in accordance with embodiments of the present invention include primary monoamines of the formula $R_xNH_2$, as well as secondary amines of the formula: $R_xR_yNH$, where $R_x$ and $R_y$ are independently selected from a hydrocarbyl group, and preferably wherein the monoamine has a molecular weight of from 100 to 1000 mol/g, more preferably from 100 to 500 mol/g.

Reference to a "hydrocarbyl group" herein in connection with Table 1, aldehyde c) and amine b) may be an aromatic or preferably saturated aliphatic or unsaturated aliphatic, group formed predominantly of carbon and hydrogen atoms. The hydrocarbyl group may be optionally substituted by one or more groups that are preferably selected from hydroxyl (-OH) groups, carboxylic acid groups, $C_1$ to alkoxy, $C_2$ to $C_8$ alkoxyalkoxy, $C_3$ to $C_6$ cycloalkyl, $-CO_2(C_1$ to $C_6)$alkyl, and $-OC(O)(C_1$ to $C_6)$alkyl. Additionally or alternatively, one or more of the carbon atoms, and any substituents attached thereto, of the hydrocarbyl group may be replaced with an oxygen atom (-O-), provided that the oxygen atom is not bonded to another heteroatom.

The hydrocarbyl group may be entirely aliphatic or a combination of aliphatic and aromatic portions. In some examples, the hydrocarbyl group includes a branched aliphatic chain which is substituted by one or more aromatic groups. Examples of hydrocarbyl groups therefore include acyclic groups, as well as groups that combine one or more acyclic portions and one or more cyclic portions, which may be selected from carbocyclic and aryl groups. The hydrocarbyl group includes monovalent groups and polyvalent groups as specified and may, for example, include one or more groups selected from alkyl, alkenyl, alkynyl, carbocyclyl (e.g. cycloalkyl or cycloalkenyl) and aryl.

Amine b) may be a polyamine, suitable polyamines used in accordance with the invention may be selected from: 1) an aliphatic primary di- or tri-amine; preferably an ether-group-containing aliphatic primary di- or tri-amine; 2) an aliphatic secondary amino-containing tri-amine having two primary aliphatic amino groups; 3) a polyamine having one or

two secondary amino groups, preferably products of the reductive alkylation of primary aliphatic polyamines with aldehydes or ketones; or 4) an aromatic polyamine.

Suitable polyamines include aliphatic primary (including cycloaliphatic or arylaliphatic diamines) selected from: 2,2-dimethyl-1,3-propanediamine, 1,3-pentanediamine (DAMP), 1,5-pentanediamine, 1,5-diamino-2-methylpentane (MPMD), 2-butyl-2-ethyl-1, 5-pentanediamine (C11 -nododiamine), 1,6-hexanediamine, 2,5-dimethyl-1,6-hexanediamine, 2,2 (4), 4-trimethylhexamethylenediamine (TMD), 1,7-heptanediamine, 1, 8-octanediamine, 1,9-nonanediamine, 1,10-decanediamine, 1,11-undecandiamine, 1,12-dodecanediamine, 1,2-,1,3- or 1,4-diaminocyclohexane, bis(4-aminocyclohexyl) methane (H 12-MDA), bis(4-amino-3-methylcyclohexyl) methane, bis(4-amino-3-ethylcyclohexyl) methane, bis(4-amino-3,5-dimethylcyclohexyl) methane, bis(4-amino-3-ethyl-5-methylcyclohexyl) methane, 1-amino-3-aminomethyl-3,5,5-trimethylcyclohexane (isophoronediamine or IPDA), 2- or 4-methyl-1,3-diaminocyclohexane or mixtures thereof, 1,3-bis(aminomethyl) cyclohexane, 1,4-bis(aminomethyl) cyclohexane, 2,5 (2,6)-bis(aminomethyl) bicyclo [2.2.1] heptane (NBDA), 3(4), 8(9)-Bis(aminomethyl) tricyclo [5.2. 1.02 '6] decane, 1,4-diamino-2,2,6-trimethylcyclohexane (TMCDA), 1,8-Me N-thandiamin, 3,9-bis(3-aminopropyl)-2,4,8,10-tetraoxaspiro [5.5] undecane, 1,3-bis(aminomethyl) benzene (MXDA), 1, 4-bis(aminomethyl) benzene, and combinations thereof; or wherein the polyamine is an aliphatic primary triamine selected from 4-aminomethyl-1,8-octanediamine, 1,3,5-tris(aminomethyl) benzene, 1,3,5-tris(aminomethyl) cyclohexane, tris(2-aminoethyl) amine, tris(2-amino-propyl) amine, tris(3-aminopropyl) amine and combinations thereof.

Amine b) may be an ether-group-containing aliphatic primary di-amine. Suitable ether-group-containing aliphatic primary di-amines include those selected from: bis (2-aminoethyl) ether, 3,6-dioxaoctane-1,8-diamine, 4,7-dioxadecane-1, 10 diamine, 4,7-dioxadecane-2,9-diamine, 4,9-dioxadodecane-1,12-diamine, 5,8-dioxadodecane-3,10-diamine, 4,7,10-trioxatridecan-1,13-diamine, or oligomers of any of the foregoing; polytetrahydrofurandiamines, such as bis(3-aminopropyl) polytetrahydrofurans, cycloaliphatic diamines containing ether groups preferably derived from propoxylation and subsequent amination of 1,4-dimethylol cyclohexane (for example, available as Jeffamine (RTM) particular RFD 270 (Huntsman)), and polyoxyalkylenediamines, such as polyoxypropylenediamines, preferably derived from amination of polyoxyalkylenediols, for example, those available under the name Jeffamine (RTM) (from Huntsman), under the name polyetheramine (from BASF) or under the name PC amine (RTM) (from Nitroil). In particular, suitable polyoxyalkylene di- or triamines are Jeffamine (RTM) D-230, Jeffamine (RTM) D-400, Jeffamine (RTM) D-2000, Jeffamine (RTM) EDR-104, Jeffamine (RTM) EDR-148, Jeffamine (RTM) EDR-176, Jeffamine (RTM) T-403, Jeffamine (RTM) T-3000, Jeffamine (RTM) T-5000, or the corresponding amines by BASF or Nitroil.

Amine b) may be an ether-group-containing aliphatic primary tri-amine. Suitable ether-group-containing aliphatic primary tri-amines include polyoxyalkylenetriamines, preferably derived from amination of polyoxyalkylenetriols.

Amine b) may be a secondary amino-containing tri-amine. Suitable aliphatic secondary amino-containing triamines having two primary aliphatic amino groups include: 3-(2-aminoethyl) aminopropylamine, bis(hexamethylene) triamine (BHMT), diethylenetriamine (DETA), triethylenetetramine (TETA), tetraethylenepentamine (TEPA), pentaethylenehexamine (PEHA) or higher homologs of linear polyethyleneamines such as polyethylenepolyamine with 5 to 7 ethylenepolyamine units (HEPA), products of the multiple cyanoethylation or cyanobutylation and subsequent hydrogenation of primary polyamines having at least two primary amino groups, such as Dipropylenetriamine (DPTA), N-(2-aminoethyl)-1,3-propanediamine (N3-amine), N,N'-bis(3-aminopropyl) ethylenediamine (N4-amine), N,N'-bis (3-aminopropyl)-1,4-diaminobutane, N5-(3-aminopropyl)-2-methyl-1,5-pentanediamine, N3-(3-aminopentyl)-1,3-pentanediamine, N5-(3-Amino-1-ethyl-propyl)-2-methyl-1,5-pentanediamine, N,N'-bis (3-amino-1-ethylpropyl)-2-methyl-1,5-pentanediamine, and combinations thereof.

Amine b) may be a polyamine having one or two secondary amino groups. Suitable polyamines having one or two secondary amino groups include: $N^1$-benzyl-1,2-propanediamine, $N^1$-(4-methoxybenzyl)-1,2-propanediamine, N-benzyl-1,3-bis (aminomethyl) benzene, N,N'-Dibenzyl-1,3-bis (aminomethyl) benzene, N-2-ethylhexyl-1,3-bis (aminonyl) benzene, N,N'-bis(2-ethylhexyl)-1,3-bis(aminomethyl) benzene, and partially styrenated polyamines, such as partially styrenated 1,3-bis(aminomethyl) benzene (MXDA) (available from Mitsubishi gas Chemical).

Amine b) may be an aromatic polyamine. Suitable aromatic polyamines include m- and p-phenylenediamine, 4,4'-, 2,4'- and/or 2,2'-diaminodiphenylmethane, 3,3'-dichloro-4,4'-diaminodiphenylmethane (MOCA) diisocyanate, 2,4- and / or 2,6-toluene diamine (available as Ethacure 300 from Albemarle®), mixtures of 3,5-dimethylthio-2,4- and -2,6-toluene diamine, mixtures of 3,5-diethyl -2,4- and -2,6-toluylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diamino diphenylsulfone (DDS), 4-amino-N-(4-aminophenyl) benzenesulfonamide, 5,5'-methylenedianthranilic acid, dimethyl (5,5'-methylenedithethranilate), 1,3-propylenebis(4-aminobenzoate), 1,4-butylenebis(4-aminobenzoate), polytetramethyleneoxide-bis(4-aminobenzoate), 1,2-bis(2-aminophenylthio)ethane, 2-methylpropyl (4-chloro-3,5-diaminobenzoate), t-Butyl (4-chloro-3,5-diaminobenzoate), and combinations thereof.

The amines described above can also be adducted with epoxides or epoxy resins and further modification may be possible with fatty acids to form amido or polyamides. Optionally, the polyamine further comprises amido or polyamide

functional groups derived from adduction of the polyamine with one or more epoxides and/or modification with one or more fatty acids.

Optionally, aldehyde c) has the formula: $R^5CH=O$, where $R^5$ is H or a $C_1$-$C_8$ hydrocarbyl group. In some embodiments, aldehyde c) is selected from formaldehyde, acetaldehyde, propionaldehyde, butylaldehyde, furfuraldehyde, and benzaldehyde, preferably formaldehyde. Furthermore, difunctional aldehydes can be used in the preparation of the polymeric Mannich base and could advantageously be used to introduce cross-links into the cured resin. Formaldehyde is nevertheless most preferred and can be supplied in any one of its commonly available forms, for instance as an aqueous solution of the gas or in polymerized form as paraformaldehyde.

The hydrocarbyl polymeric backbone of polymer a) may be derived from an epoxy resin. Suitable epoxy resin derived hydrocarbyl polymeric backbones of polymer a) may be polymeric, liquid or solid, but is preferably liquid at room temperature. Examples of epoxy resins suitable for use in preparation of polymer a) include polyglycidyl ethers of polyhydric phenols, epoxidised novolacs or similar glycidated polyphenolic resins, polyglycidyl ethers of alcohols, glycols or polyglycols, and polyglycidyl esters of polycarboxylic acids.

Examples of polymer a) derived from an epoxy resin may include di-phenol-end-capped polymers having ether-linked aromatic terminal groups, preferably wherein the hydroxy-substituted ring atom of the aromatic terminal group is *ortho-* or *para-* to the ring atom to which the hydrocarbyl polymeric backbone is bonded.

Preferred examples of epoxy resins that may be used in the formation of polymer a) may be based on polyglycidyl ethers of a polyhydric phenol. Polyglycidyl ethers of polyhydric phenols can be produced, for example, by reacting an epihalohydrin with a polyhydric phenol in the presence of an alkali. Examples of suitable polyhydric phenols include: 2,2-bis (4-hydroxyphenyl) propane (bisphenol-A); 2,2-bis(4-hydroxy-3-tert-butylphenyl)propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane and the like. Commercial examples of preferred epoxy resins that may be used in the formation of polymer a) include EPILOK (RTM) 60-600.

Particularly preferred epoxy resins that may be used in the formation of polymer a) may be based on 2,2-bis (4-hydroxyphenyl) propane (bisphenol-A) and epoxidized novolacs. Optionally, examples of epoxy resins that may be used in the formation of polymer a) are selected from epoxidized novolacs and bisphenols, such as bisphenol A or F, or halogenated (e.g. chlorinated or fluorinated) analogues thereof.

Examples of suitable epoxy resins that may be used in the formation of polymer a) include epoxidized novolacs and bisphenols (A or F) or halogenated analogues thereof.

In another aspect, the present invention provides an epoxy resin curative composition comprising the polymeric Mannich base prepared or preparable by the methods described herein. The polymeric Mannich base curative agents according to the present invention may be used as sole curing agents or in combination with other co-curing agents for epoxy resin systems. The polymeric Mannich base obtained by the method of the present invention may also be modified with an accelerator (for example, by dissolution of the accelerator in the polymeric Mannich base curative agent) preferably selected from acidic accelerators (such as salicylic acid), tertiary amines and imidazoles common in the art. Typical concentrations of such accelerators, if present, may be from 0.1% to 10% of the polymeric Mannich Base curing agent, preferably from 1% to 5%. The polymeric Mannich base may also be diluted or modified with suitable diluents or extenders known in the prior art.

In preferred embodiments, the epoxy resin curative composition comprises less than 0.1 wt.% of free aromatic monomer. More preferably, the composition comprises less than 100 ppm, even more preferably less than 50 ppm, of free aromatic monomer. The content of free aromatic monomer may be reduced, or substantially eliminated, in the curative compositions according to the present invention through the use of an excess of amine b) and aldehyde c) where the aromatic monomer is employed and/or through purification techniques, for instance distillation.

The present invention thus also provides a method for preparing a cured epoxy resin, said method comprising:

a) contacting an epoxy resin with a polymeric Mannich base as described herein; and
b) forming a cured epoxy resin.

In a further aspect, the present invention thus also provides a cured epoxy resin prepared, or preparable, by the methods disclosed herein. Suitable epoxy resins that may be cured by the Mannich base as described herein include epoxidized novolacs and bisphenols (A or F) or halogenated analogues thereof.

Novolac is a polymer derived from phenols and formaldehyde comprising a methylene-phenolic repeating unit as shown below. The novolac may be optionally substituted with one or more hydrocarbyl substituents. The novolac may also have a degree of crosslinking. Optionally the methods described herein may further comprise a preceding step of performing a polycondensation reaction of an aromatic monomer comprising a ring having two or more hydroxy-substituted ring atoms with an aldehyde and/or ketone monomer, in order to provide polymer a) of step i), preferably the aldehyde is selected from formaldehyde, acetaldehyde, acrolein, glyoxal, benzaldehyde, naphthaldehyde and hydroxybenzaldehyde and/or wherein the ketone is selected from cyclohexanone and acetophenone.

Novolac

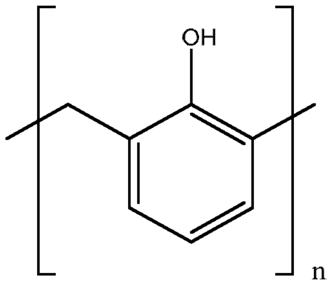

Optionally the methods described herein may further comprise a preceding step of performing a vinyl polymerization type reaction with a polyhydric phenol to provide the hydrocarbyl polymeric backbone precursor. The phenolic vinyl monomer comprises an aromatic phenol substituted with a vinyl group which is capable of undergoing vinyl polymerisation to form the vinyl polymer of the phenol. Optionally the phenolic vinyl monomer may be substituted with one or more hydrocarbyl substituents. It will be appreciated that other monomers substituted with a vinyl group could be included in the polymerisation process to yield a co-polymer. The general structure of the polyvinyl phenol repeating unit is shown below.

Phenol vinyl polymer

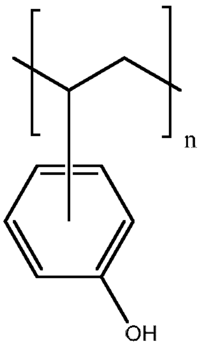

Optionally, the polymeric Mannich base obtained by the methods described herein is modified: a) by adduction; b) with an accelerator, preferably selected from acidic accelerators (such as salicylic acid), tertiary amines and imidazoles; c) with a diluent or extender.

Reference to a "hydrocarbyl group" herein in connection with substituents present on a polymeric repeating unit of polymer a) may be an aromatic or preferably saturated aliphatic or unsaturated aliphatic, group formed predominantly of carbon and hydrogen atoms. The hydrocarbyl group may be optionally substituted by one or more groups that are preferably selected from hydroxyl (-OH) groups, carboxylic acid groups, $C_1$ to alkoxy, $C_2$ to $C_8$ alkoxyalkoxy, $C_3$ to $C_6$ cycloalkyl, $-CO_2(C_1$ to $C_6)$alkyl, and $-OC(O)(C_1$ to $C_6)$alkyl. Additionally or alternatively, one or more of the carbon atoms, and any substituents attached thereto, of the hydrocarbyl group may be replaced with an oxygen atom (-O-), provided that the oxygen atom is not bonded to another heteroatom.

The hydrocarbyl group may be entirely aliphatic or a combination of aliphatic and aromatic portions. In some examples, the hydrocarbyl group includes a branched aliphatic chain which is substituted by one or more aromatic groups. Examples of hydrocarbyl groups therefore include acyclic groups, as well as groups that combine one or more acyclic portions and one or more cyclic portions, which may be selected from carbocyclic and aryl groups. The hydrocarbyl group includes monovalent groups and polyvalent groups as specified and may, for example, include one or more groups selected from alkyl, alkenyl, alkynyl, carbocyclyl (e.g. cycloalkyl or cycloalkenyl) and aryl.

The polymeric Mannich base curing agent is present in an amount effective to cure the epoxy resin. The skilled person appreciates that an effective amount of the polymeric Mannich base may be determined based on the stoichiometry of the reaction with the epoxy resin. For example, the stoichiometric molar ratio of epoxy groups in the epoxy resin to amine hydrogens in the polymeric Mannich base may range, for instance, from 1.5:1 to 1:1.5, more preferably from 1.2:1 to

1:1.2. In another example, the weight ratio of the epoxy resin to polymeric Mannich base curing agent is from 1:1 to 5:1, preferably from 2:1 to 3:1. The epoxy resin can be blended or mixed with the polymeric Mannich base curative agent of the present invention simultaneously or in any order at a temperature below the curing temperature, which is typically below 100 °C.

The epoxy resin can be any epoxy resin which can be cured by the polymeric Mannich base curing agent. Generally, the epoxy resin can be any curable epoxy resin and may have, for instance, a 1,2-epoxy equivalency greater than one and preferably, on average, more than 1.5 epoxide groups per molecule. The epoxy resin can be saturated or unsaturated, linear or branched, aliphatic, cycloaliphatic, aromatic or heterocyclic, and may be substituted, provided such substituents do not interfere with the curing reaction. Such substituents can include bromine.

The epoxy resin to which the polymeric Mannich base curative of the present invention is added may include other additives, such as flow control additives, antifoam agents, or anti-sag agents, as well as other additives such as pigments, reinforcing agents, fillers, elastomers, stabilizers, extenders, plasticizers, or flame retardants depending on the application.

In another aspect, the present invention provides a polymeric Mannich base curative agent as described herein, including those prepared or preparable by the methods described herein. The present invention offers the means for preparing a cured epoxy resin using a polymeric Mannich base curative agent that is obtainable from a renewable source and preparable with low toxicity. The polymeric Mannich base curative of the present invention may be used to help lower the reliance on phenol derived curative agents. The polymeric Mannich base curative of the present invention has also been found to have a far lower hazard rating in comparison to conventional phenol derived curative agents.

The polymeric Mannich base of the present invention may be represented by the formula defined below. The polymeric Mannich base of the present invention as depicted below is preparable by the methods disclosed herein.

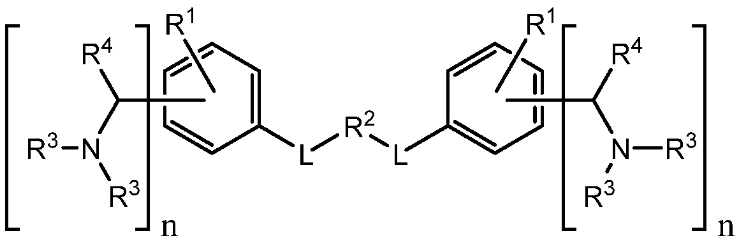

Polymeric Mannich Base

The aromatic terminal groups of the polymeric Mannich base may comprise one or more $R^1$ groups at any position or combination of positions. Preferably, $R^1$ is at the 3- or 5-position with regard to L. $R^1$ may be defined as any functional group that increases the reactivity of the ring towards electrophilic aromatic substitution or as any one of the activating substituents listed hereinabove, and/or defined in Table 1, *e.g.* an amine, alcohol, ether, ester, amide, thiol, thioether, phosphine, alkene, alkyne, alkane, or silane, optionally substituted with one or more $C_1$ to $C_{10}$ hydrocarbyl groups, as defined hereinbelow, or preferably, one or more $C_1$ to $C_{10}$ alkyl group, more preferably, one or more $C_1$ to $C_6$ alkyl groups.

The Mannich reaction may occur at any unsubstituted position on the aromatic terminal group and may occur any number of times per aromatic terminal group up to the number of unsubstituted positions on the aromatic terminal group. As at least one unsubstituted position is required on the aromatic terminal group, the polymeric Mannich base formed by the methods described herein will have at least one substituent derived from amine b) and aldehyde c). The number of substituents derived from amine b) and aldehyde c) present on each aromatic terminal group is defined by n, wherein n ranges from 1 to the number of unsubstituted positions on the aromatic terminal group.

Although the above structure depicts monocyclic (phenyl) ring systems for the aromatic terminal groups, polycyclic ring systems are possible for the terminal group, such as a bicyclic ring system (e.g. naphthyl). Groups $R^1$ to $R^4$ are as defined with regard to Scheme 2. L represents a linker through which the aromatic terminal groups are bonded to the hydrocarbyl polymeric backbone through an ether, ester, amine, amide, thioether, or thioester group. It would be appreciated that the exact structure of L depends on the nature of the electrophile present on the hydrocarbyl polymeric backbone precursor and the nucleophile present on the aromatic monomer, for example, L is a beta-hydroxy ether linker ($-O-CH_2-CHOH-R^2$) if polymer a) is prepared via epoxide opening with a phenolic aromatic monomer. Although the above structure depicts the $-CHR^4-CNR^3_2$ substituent as *-para* to L, it would be appreciated that the $-CHR^4-CNR^3_2$ substituent may be at any position, depending on the position(s) of the activating group(s).

Epoxy resins prepared in accordance with the present invention have been found to compare favourably with those prepared using conventional curative agents.

Thus, the polymeric Mannich base curative of the present invention offers a significantly improved hazard

classification over analogous phenol-based curatives (and avoids the toxicity issues associated with epoxy resins obtained using phenol-based curatives), whilst maintaining the useful properties associated with a conventional Mannich base curing agent.

Further aspects of the invention include the use of aromatic terminal groups linked by a hydrocarbyl polymeric backbone, wherein each of the aromatic terminal groups comprises a ring having at least one activating group, preferably wherein the activating group is a hydroxy group and at least one unsubstituted ring atom capable of undergoing electrophilic aromatic substitution, wherein the aromatic terminal groups are bonded to the hydrocarbyl polymeric backbone through an ether, ester, amine, amide, thioether, or thioester group, preferably through a an ether or ester group, for forming an epoxy resin curative, the use of the polymeric Mannich base according to the invention for crosslinking an epoxy resin.

Optionally the methods described herein may further comprise a preceding step of performing a polycondensation reaction of an aromatic monomer comprising a ring having two or more hydroxy-substituted ring atoms with an aldehyde and/or ketone monomer, in order to provide the hydrocarbyl polymeric backbone precursor, for example a novolac derived hydrocarbyl polymeric backbone precursor. Suitable aldehydes include formaldehyde, acetaldehyde, acrolein, glyoxal, benzaldehyde, naphthaldehyde and hydroxybenzaldehyde and/or wherein the ketone is selected from cyclohexanone and acetophenone.

The invention will now be described by reference to the following non-limiting Examples and the Figures.

## EXAMPLES

### EXAMPLE 1 - Preparation of a polymer a)

A polymeric Mannich base epoxy curative precursor was first prepared by the reaction of a di-functional epoxy resin D.E.R.™ 732 (a liquid reaction product of epichlorohydrin and di-propylene glycol) with resorcinol in the presence of a catalyst.

640 grams of polypropylene glycol di-glycidyl ether (2 eq. epoxy) was charged to a 1 litre, round-bottomed flask equipped with a condenser, mechanical stirrer, addition funnel and thermometer. 220 grams (2 mols) of resorcinol was charged into the round-bottomed flask. 6.78 grams (0.02 mols) of tetra butyl phosphonium bromide catalyst was added and the material mixed together. The flask was set for atmospheric reflux and heated. A slight exotherm was observed at approximately 140°C and the material continuously heated to 200°C. The reaction mixture was held at 200°C.

The product of the reaction, corresponding to polymer a) was analysed and found to have the following properties.

**Table 3:** Polymer a) properties

| Physical property | Units | Method | Result |
|---|---|---|---|
| Colour | - | ASTM D6166 | 12 |
| Epoxy Equivalent Weight | g/eq | ASTM D-1652 | >12000 |
| Viscosity | Pa•s | ASTM D-445 | 31 |

The crude product obtained from the above reaction was found to contain 3.4% free resorcinol.

### EXAMPLE 2 - Preparation of a polymeric Mannich base epoxy curative 1

840 grams of crude reaction product of Example 1 was cooled down to 50°C in the same round-bottomed flask. At this point, 1224 grams of Di Methyl Amino Propylamine (DMAPA) (12 mols) was charged into the round-bottomed flask. The temperature was equilibrated to 50°C at which point 493 grams (6 mols) of a 36.5% aqueous formaldehyde solution was added incrementally over 60 minutes whilst maintaining the temperature between 45-60°C. Once charged, the reaction mixture was heated to 80°C and held for 120 minutes. The flask was set for atmospheric distillation and heated to 140°C collecting 436 grams of aqueous distillate containing less than 1 % of free DMAPA. Following 20 minutes of reaction at 140°C, the material was cooled, filtered through 5μm filter bags (for example, polypropylene and polyester filter bags) to yield polymeric Mannich base 1 (PMB1) and evaluated.

Theoretical composition:

NEW MANNICH POLYMER : 71.8% [Amine hydrogen equivalent weight = 260]
DMAPA : 28.2% [Amine hydrogen equivalent weight = 51]

MIXED SYSTEM Amine hydrogen equivalent weight = 121

**Table 4:** Polymeric Mannich Base 1 (PMB1) properties

| Physical property | Units | Method | Result |
|---|---|---|---|
| Colour | - | ASTM D6166 | 10 |
| Viscosity | mPa•s | ASTM D-445 | 2,600 |
| Gel-time | Minutes | ASTM D3056 | 23 |

Gel-time reactivity 100:60 with liquid epoxy resin EEW 190.

Polymeric Mannich base 1 (PMB1) according to the invention offers excellent reactivity and will cure across a broad temperature range. It also offers a surprisingly good pot-life for a material with this reactivity cure profile.

**Example 3 - Comparison of the properties of a polymeric Mannich base to a conventional Mannich base**

Polymeric Mannich base 2 (PMB2) is a polymeric Mannich base curing agent of the invention compliant with REACH guidelines, prepared by following a similar synthetic route as employed in Examples 1 and 2 above ($R^2$ in the idealised structure below corresponding to the polymeric backbone derived from polypropylene glycol di-glycidyl ether used in preparation of the polymer a) precursor).

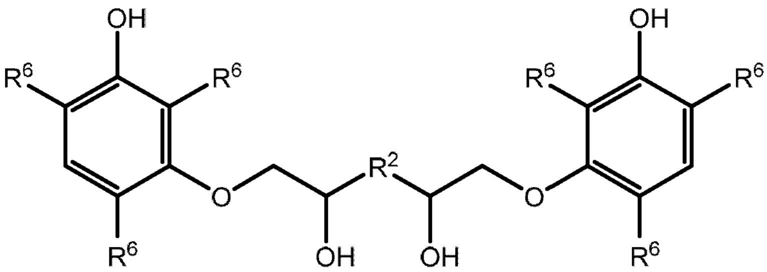

$R^6$ = $-CH_2-NH-CH_2-CH_2-CH_2-NMe_2$

Polymeric Mannich Base 2

PMB2 cures/accelerates more efficiently than the former industry standard tertiary amine accelerator, CURACAT (RTM) 36-216 - 2,4,6-Tris(dimethylaminomethyl)phenol, and offers similar performance to a phenol based Mannich base derived from monomeric phenol with like amines and formaldehyde.

**Table 5:** comparison of Polymeric Mannich base 2 (PMB2) and CURACAT (RTM) 36-216

| Physical property | Units | Method | CURACAT (RTM) 36-216 | PMB2 |
|---|---|---|---|---|
| Molecular weight | Daltons | Gel permeation chromatography | 340 | 1600 |
| $H^+$ Active Hydrogen Equivalent | g/equivalent | Calculated | 75 | 115 |
| Mix Ratio | Per hundred resin | Calculated | 40 | 60 |
| Colour | - | Visual | 6 | 8 |
| Gel-time | Minutes | ASTM D3056 | 23 | 19 |
| Glass transition temperature[1] | °C | ASTM E1356 | 46 | 47 |
| Glass transition temperature [2] | °C | ASTM E1356 | 66 | 68 |
| Hardness[1] | Shore D | ASTM D2240 | 58 | 68 |

(continued)

| Physical property | Units | Method | CURACAT (RTM) 36-216 | PMB2 |
|---|---|---|---|---|
| Hardness[2] | Shore D | ASTM D2240 | 80 | 82 |
| [1] Cure schedule of 24 hours at 5 °C and then 48 hours at 5°C. Mixed with EPILOK (RTM) 60-600 in a stochiometric ratio. [2] Cure schedule of 24 hours at 25 °C and then 48 hours at 25°C. Mixed with EPILOK (RTM) 60-600 in a stochiometric ratio. | | | | |

Polymeric Mannich base 2 (PMB2) offers outstanding reactivity and cure response. Several cure schedules may be employed including ambient curing although if solvated systems are employed then the cure rates will be influenced by the chosen solvent system. Polymeric Mannich base 2 (PMB2) will cure at low temperatures and is a very efficient accelerator.

**Example 4: Comparison of the safety profile of a polymeric Mannich base to a conventional Mannich base**

Polymeric Mannich base 3 (PMB3) is a polymeric Mannich base curing agent of the invention compliant with REACH guidelines, prepared following a similar synthetic route as employed in Examples 1 and 2 above, except using an alternative amine b) reagent. ($R^2$ in the idealised structure below corresponding to the polymeric backbone derived from polypropylene glycol di-glycidyl ether used in preparation of the polymer a) precursor).

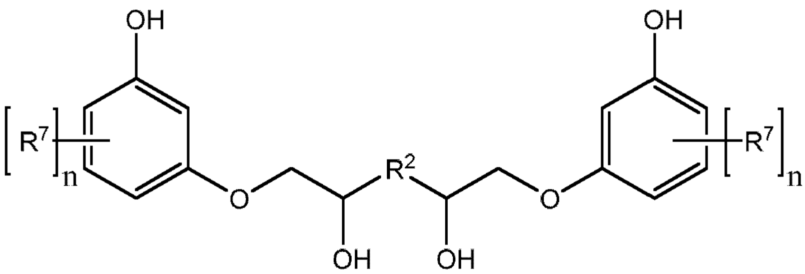

$R^7$ = $-CH_2-NH-(CH_2-CH_2-NH)_3-H$ n = from 1 to 4

Polymeric Mannich base 3

Table 6 below compares the Globally Harmonized System of Classification and Labelling of Chemicals (GHS) hazard symbols of polymeric Mannich base 3 (PMB3) to those of Curamine (RTM) 31-537, a conventional phenolic Mannich base, the structure of which is shown below.

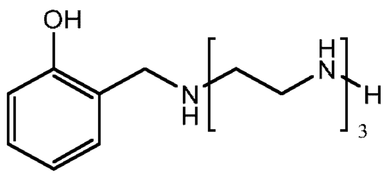

Curamine (RTM) 31-537

**Table 6:** Comparison of GHS hazard symbols of polymeric Mannich base 3 (PMB3) and Curamine (RTM) 31-537

| **Curamine (RTM) 31-537** | |
|---|---|
| Pictogram requirements | Hazard statements |
| Corrosive<br>Toxic<br>Health Hazard | H302+H312 Harmful if swallowed or in contact with skin<br>H331 Toxic if inhaled<br>H314 Causes severe skin burns and eye damage<br>H317 May cause an allergic skin reaction |

(continued)

| Curamine (RTM) 31-537 | |
|---|---|
| Pictogram requirements | Hazard statements |
| | H341 Suspected of causing genetic defects<br>H373 May cause damage to organs through prolonged or repeated exposure<br>H412 Harmful to aquatic life with long lasting effects |
| **Polymeric Mannich base 3 (PMB3)** | |
| Pictogram requirements | Hazard statements |
| Corrosive<br>Harmful | H312 Harmful in contact with skin<br>H314 Causes severe skin burns and eye damage<br>H317 May cause an allergic skin reaction<br>H412 Harmful to aquatic life with long lasting effects |

As can be seen from Table 6, polymeric Mannich base 3 (PMB3)of the present invention has a highly advantageous safety profile over the conventional phenolic Mannich base.

Polymeric Mannich bases according to the present invention offer excellent reactivity and will cure across a broad temperature range. It also offers a surprisingly good pot-life for a material with this reactivity cure profile. Polymeric Mannich bases according to the present invention also provide excellent viscosity profiles across a range of temperatures as depicted in Figure 1. The polymeric Mannich base of Example 1 has a viscosity ranging from 5,300 mPa•s at 15 °C to 1,900 mPa•s at 30 °C, which is typical of a conventional Mannich base. Viscosity was measured using ASTM D2556-14(2018).

Polymeric Mannich bases according to the present invention impart high viscosity onto epoxy resins as the curing process progresses. Figure 2 demonstrates the isothermal viscosity increase of the polymeric Mannich base 1 (PMB1) when combined with EPILOK (RTM) 60-600 [Bitrez Ltd], a liquid epoxy resin with EEW ≈ 190. Material is combined in the designated ratio and then force cooled to maintain temperature at a constant 25 °C. The viscosity of the mixture can be seen to enjoy a temperature independent increase from 3,200 mPa•s to 18,000 mPa•s over the course of 20 minutes, thus demonstrating the rapid and effective curing of the epoxy resin by a polymeric Mannich base of the present invention. The viscosity was measured using ASTM D2556-14(2018).

Polymeric Mannich bases according to the present invention provide rapid cure times, and dry times. Figure 3 demonstrates the dry times and cure times of the polymeric Mannich base 1 (PMB1) being used to cure EPILOK (RTM) 60-600 (Bitrez Ltd) at both 5 and 25 °C. Dry times are 3 hours at 5 °C and 0.9 hours at 25 °C. Cure times are 6 hours at 5 °C and 1.5 hours at 25 °C. These properties are comparable with those of a conventional phenol Mannich base processed with DMAPA, which is a product withdrawn due to REACH regulations. Therefore, polymeric Mannich bases according to the present invention are able to provide equally rapid curing and drying as a conventional phenol Mannich base without being toxic or hazardous to health, in satisfaction of REACH requirements. Dry and cure times were measured using ASTM D3056-14(2018).

Figure 4 further demonstrates the rapid cure times, and dry times of polymeric Mannich base 2 (PMB2) being used to cure EPILOK (RTM) 60-600 (Bitrez Ltd). Dry times are 2 hours at 5 °C and 0.75 hours at 25 °C. Cure times are 6 hours at 5 °C and 1.25 hours at 25 °C. Dry and cure times were measured using ASTM D3056-14(2018).

Figure 5 further demonstrates the temperature viscosity relationship of polymeric Mannich base 3 (PMB3). Polymeric Mannich base 3 has a viscosity ranging from 3,500 mPa•s at 15 °C to 1,000 mPa•s at 30 °C. Viscosity was measured using ASTM D2556-14(2018).

## Claims

**1.** A method of preparing a polymeric Mannich base for use as an epoxy resin curative and/or accelerator, said method comprising:

i) providing:

a) a polymer comprising aromatic terminal groups linked by a hydrocarbyl polymeric backbone, wherein each of the aromatic terminal groups comprises a ring substituted with one or more activating groups and at least one unsubstituted ring atom, wherein the one or more activating groups is capable of activating the aromatic

terminal group to undergo electrophilic aromatic substitution at the at least one unsubstituted ring atom; wherein the aromatic terminal groups are bonded to the hydrocarbyl polymeric backbone through an ether, ester, amine, amide, thioether, or thioester group;

b) a primary or secondary monoamine and/or a polyamine comprising primary and/or secondary amino groups, and

c) an aldehyde; and

ii) performing a Mannich reaction using components a) to c), wherein each aromatic terminal group of the polymer is converted to a Mannich base.

**2.** A method according to Claim 1, wherein each terminal group of polymer a) comprises a plurality of unsubstituted ring atoms and a plurality of Mannich reactions occur on each aromatic terminal group in step ii).

**3.** A method according to Claim 1 or Claim 2 wherein the one or more activating groups are independently selected from $-NR_2$, -OR, -O(CO)R, -NR(CO)R, -SR, - $PR_2$, -C≡CR, -CR=$CR_2$, -$CR_3$, or -$SiR_3$, preferably wherein the one or more activating groups are independently selected from -$NR_2$ or -OR, more preferably wherein the one or more activating groups are -OH; wherein R is independently selected from H or a $C_1$ to $C_{10}$ hydrocarbyl group, preferably wherein R is independently selected from H or a $C_1$ to $C_{10}$ alkyl group, more preferably wherein R is independently selected from H or a $C_1$ to $C_6$ alkyl group.

**4.** A method according to any one of the preceding claims, wherein the aromatic terminal groups are bonded to the hydrocarbyl polymeric backbone by an ether or ester bond; preferably wherein polymer a) of step i) is a di-phenol-end-capped polymer having ether-linked terminal phenol groups, and more preferably wherein the hydroxy-substituted ring atom of the phenol group is *ortho*- or *para*- to the ring atom to which the polymeric backbone is bonded.

**5.** A method according to any one of the preceding claims, wherein the method comprises a condensation reaction between b) the primary or secondary monoamine and/or a polyamine comprising primary and/or secondary amino groups and c) the aldehyde, prior to reaction with a) the polymer with terminal aromatic groups; or wherein the method comprises a reaction between a) the polymer with terminal aromatic groups and c) the aldehyde, prior to reaction with b) the primary or secondary monoamine and/or a polyamine comprising primary and/or secondary amino groups.

**6.** A method according to any one of the preceding claims, wherein the at least one unsubstituted ring atom of each aromatic terminal group, prior to reaction in step ii), is *ortho*- or *para*- to at least one activating group; and/or wherein each of the aromatic terminal groups comprises either a single ring or a bicyclic ring system.

**7.** A method according to any one of Claims 1 to 6, wherein the method further comprises a preceding epoxy-fusion step in which an aromatic monomer comprising a ring substituted with at least one nucleophilic substituent selected from an amino, hydroxy, or thiol group, and with at least one activating group, is reacted with an epoxy resin comprising terminal epoxy functional groups in the presence of a catalyst, preferably a tetrabutyl phosphonium bromide catalyst, in order to provide polymer a) of step i), preferably wherein the ring of the aromatic monomer is part of a monocyclic ring system or one ring of a bicyclic ring system; preferably wherein the at least one nucleophilic substituent is a hydroxy group; and preferably wherein the epoxy resin is selected from polyglycidyl ethers of polyhydric phenols, glycidated polyphenolic resins, polyglycidyl ethers of alcohols, glycols or polyglycols, and polyglycidyl esters of polycarboxylic acids, preferably wherein the epoxy resin is selected from epoxidized novolacs and bisphenols (A or F) or halogenated analogues thereof: or
wherein the method further comprises either:

a preceding step of performing a polycondensation reaction of an aromatic monomer comprising a ring having two or more hydroxy-substituted ring atoms with an aldehyde and/or ketone monomer, in order to provide polymer a) of step i), preferably wherein the aldehyde is selected from formaldehyde, acetaldehyde, acrolein, glyoxal, benzaldehyde, naphthaldehyde and hydroxybenzaldehyde and/or wherein the ketone is selected from cyclohexanone and acetophenone; or
a preceding step of performing a vinyl polymerization type reaction with a polyhydric phenol to provide polymer a) of step i).

**8.** A method according to any one of the preceding claims, wherein b) is a monoamine selected from alkyl monoamines, alkanolamines and poly(alkylene oxide) amines; or wherein b) is a polyamine optionally further comprising amido or polyamide functional groups derived from adduction of the polyamine with one or more epoxides and/or modification

with one or more fatty acids, wherein the polyamine is selected from: 1) an aliphatic primary di- or tri-amine; preferably an ether-group-containing aliphatic primary di- or tri-amine; 2) an aliphatic secondary amino-containing tri-amine having two primary aliphatic amino groups; 3) a polyamine having one or two secondary amino groups, preferably products of the reductive alkylation of primary aliphatic polyamines with aldehydes or ketones; or 4) an aromatic polyamine;

preferably wherein when the polyamine is 1) an aliphatic primary diamine it is selected from: 2,2-dimethyl-1,3-propanediamine, 1,3-pentanediamine (DAMP), 1,5-pentanediamine, 1,5-diamino-2-methylpentane (MPMD), 2-butyl-2-ethyl-1, 5-pentanediamine (C11 -nododiamine), 1,6-hexanediamine, 2,5-dimethyl-1,6-hexanediamine, 2,2 (4), 4-trimethylhexamethylenediamine (TMD), 1,7-heptanediamine, 1, 8-octanediamine, 1,9-nonanediamine, 1,10-decanediamine, 1,11-undecandiamine, 1,12-dodecanediamine, 1,2-,1,3- or 1,4-diaminocyclohexane, bis(4-aminocyclohexyl) methane (H 12-MDA), bis(4-amino-3-methylcyclohexyl) methane, bis(4-amino-3-ethylcyclohexyl) methane, bis(4-amino-3,5-dimethylcyclohexyl) methane, bis(4-amino-3-ethyl-5-methylcyclohexyl) methane, 1-amino-3-aminomethyl-3,5,5-trimethylcyclohexane (isophoronediamine or IPDA), 2- or 4-methyl-1,3-diaminocyclohexane or mixtures thereof, 1,3-bis(aminomethyl) cyclohexane, 1,4-bis(aminomethyl) cyclohexane, 2,5 (2,6)-bis(aminomethyl) bicyclo [2.2.1] heptane (NBDA), 3(4), 8(9)-Bis(aminomethyl) tricyclo [5.2. 1.02 '6] decane, 1,4-diamino-2,2,6-trimethylcyclohexane (TMCDA), 1,8-Me N-thandiamin, 3,9-bis(3-aminopropyl)-2,4,8,10-tetraoxaspiro [5.5] undecane, 1,3-bis(aminomethyl) benzene (MXDA), 1, 4-bis(aminomethyl) benzene, and combinations thereof;

or preferably wherein when the polyamine is 1) an aliphatic primary triamine it is selected from 4-aminomethyl-1,8-octanediamine, 1,3,5-tris(aminomethyl) benzene, 1,3,5-tris(aminomethyl) cyclohexane, tris(2-aminoethyl) amine, tris(2-amino-propyl) amine, tris(3-aminopropyl) amine and combinations thereof; or wherein the polyamine is an ether-group-containing aliphatic primary diamine selected from: bis (2-aminoethyl) ether, 3,6-dioxaoctane-1,8-diamine, 4,7-dioxadecane-1, 10 diamine, 4,7-dioxadecane-2,9-diamine, 4,9-dioxadodecane-1,12-diamine, 5,8-dioxadodecane-3,10-diamine, 4,7,10-trioxatridecan-1,13-diamine, or oligomers of any of the foregoing; polytetrahydrofurandiamines, such as bis(3-aminopropyl) polytetrahydrofurans, cycloaliphatic diamines containing ether groups preferably derived from propoxylation and subsequent amination of 1,4-dimethylol cyclohexane, and polyoxyalkylenediamines, such as polyoxypropylenediamines, preferably derived from amination of polyoxyalkylenediols, and combinations thereof;

or preferably wherein when the polyamine is 1) an ether-group-containing aliphatic primary tri-amine it is selected from polyoxyalkylenetriamines, preferably derived from amination of polyoxyalkylenetriols;

or preferably wherein when the polyamine is 2) an aliphatic secondary amino-containing tri-amine having two primary aliphatic amino groups it is selected from: 3-(2-aminoethyl) aminopropylamine, bis(hexamethylene) triamine (BHMT), diethylenetriamine (DETA), triethylenetetramine (TETA), tetraethylenepentamine (TEPA), pentaethylenehexamine (PEHA) or higher homologs of linear polyethyleneamines such as polyethylenepolyamine with 5 to 7 ethylenepolyamine units (HEPA), products of the multiple cyanoethylation or cyanobutylation and subsequent hydrogenation of primary polyamines having at least two primary amino groups, such as Dipropylenetriamine (DPTA), N-(2-aminoethyl)-1,3-propanediamine (N3-amine), N,N'-bis(3-aminopropyl) ethylenediamine (N4-amine), N,N'-bis (3-aminopropyl)-1,4-diaminobutane, N5-(3-aminopropyl)-2-methyl-1,5-pentanediamine, N3-(3-aminopentyl)-1,3-pentanediamine, N5-(3-Amino-1-ethyl-propyl)-2-methyl-1,5-pentanediamine, N,N'-bis (3-amino-1-ethyl-propyl)-2-methyl-1,5-pentanediamine, and combinations thereof;

or preferably wherein when the polyamine is 3) a polyamine having one or two secondary amino groups it is selected from: $N^1$-benzyl-1,2-propanediamine, $N^1$-(4-methoxybenzyl)-1,2-propanediamine, N-benzyl-1,3-bis (aminomethyl) benzene, N,N'-Dibenzyl-1,3-bis (aminomethyl) benzene, N-2-ethylhexyl-1,3-bis (aminonyl) benzene, N,N'-bis(2-ethylhexyl)-1,3-bis(aminomethyl) benzene, and partially styrenated polyamines, such as partially styrenated 1,3-bis(aminomethyl) benzene (MXDA), and combinations thereof;

or preferably wherein when the polyamine is 4) an aromatic polyamine it is selected from m- and p-phenylenediamine, 4,4'-, 2,4'- and/or 2,2'-diaminodiphenylmethane, 3,3'-dichloro-4,4'-diaminodiphenylmethane (MOCA) diisocyanate, 2,4- and / or 2,6-toluene diamine, mixtures of 3,5-dimethylthio-2,4- and -2,6-toluene diamine, mixtures of 3,5-diethyl -2,4- and -2,6-toluylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diamino diphenylsulfone (DDS), 4-amino-N-(4-aminophenyl) benzenesulfonamide, 5,5'-methylenedianthranilic acid, dimethyl (5,5'-methylenedithethranilate), 1,3-propylenebis(4-aminobenzoate), 1,4-butylenebis(4-aminobenzoate), polytetramethyleneoxide-bis(4-aminobenzoate), 1,2-bis(2-aminophenylthio)ethane, 2-methylpropyl (4-chloro-3,5-diaminobenzoate), t-Butyl (4-chloro-3,5-diaminobenzoate), and combinations thereof.

**9.** A method according to any one of the preceding claims, wherein the aldehyde c) has the formula: $R^5CH=O$, where $R^5$ is H or a $C_1$-$C_8$ hydrocarbyl group, preferably wherein the aldehyde c) is selected from formaldehyde, acetaldehyde, propionaldehyde, butylaldehyde, furfuraldehyde, and benzaldehyde, most preferably formaldehyde; and/or wherein the polymeric Mannich base obtained in step ii) is modified: a) by adduction; b) with an accelerator, preferably selected from acidic accelerators (such as salicylic acid), tertiary amines and imidazoles; c) with a diluent or extender; or d) by a condensation reaction with an aldehyde and/or ketone.

**10.** A polymeric Mannich base prepared, or preparable, by the method according to any one of Claims 1 to 9.

**11.** An epoxy resin curative composition comprising the polymeric Mannich base as defined in Claim 10.

**12.** A method for preparing a cured epoxy resin, said method comprising:

a) contacting an epoxy resin with a polymeric Mannich base as defined in Claim 10; and
b) forming a cured epoxy resin, preferably wherein the epoxy resin is selected from epoxidized novolacs and bisphenols (A or F) or halogenated analogues thereof.

**13.** A cured epoxy resin prepared, or preparable, by the method of Claim 12.

**14.** Use of a polymeric Mannich base as defined in Claim 10 for crosslinking an epoxy resin.

## Patentansprüche

**1.** Ein Verfahren zur Herstellung einer polymeren Mannich-Base zur Verwendung als ein Epoxidharz-Härter und/oder -Beschleuniger, wobei das genannte Verfahren Folgendes umfasst:

i) Bereitstellen:

a) eines Polymers, das aromatische Endgruppen umfasst, die durch ein polymeres Hydrocarbylrückgrat verknüpft sind, wobei jede von den aromatischen Endgruppen einen Ring, der mit einer oder mehreren aktivierenden Gruppen substituiert ist, und mindestens ein unsubstituiertes Ringatom umfasst, wobei die eine oder mehreren aktivierenden Gruppen in der Lage sind, die aromatische Endgruppe zu aktivieren, um eine elektrophile aromatische Substitution an dem mindestens einen unsubstituierten Ringatom zu durchlaufen; wobei die aromatischen Endgruppen durch eine Ether-, Ester-, Amin-, Amid-, Thioether- oder Thioestergruppe an das polymere Hydrocarbylrückgrat gebunden sind;
b) eines primären oder sekundären Monoamins und/oder eines Polyamins, das primäre und/oder sekundäre Aminogruppen umfasst, und
c) eines Aldehyds; und

ii) Durchführen einer Mannich-Reaktion unter Verwendung der Komponenten a) bis c), wobei jede aromatische Endgruppe des Polymers in eine Mannich-Base umgewandelt wird.

**2.** Verfahren nach Anspruch 1, wobei jede Endgruppe von Polymer a) eine Vielzahl von unsubstituierten Ringatomen umfasst und eine Vielzahl von Mannich-Reaktionen an jeder aromatischen Endgruppe in Schritt ii) stattfinden.

**3.** Verfahren nach Anspruch 1 oder Anspruch 2, wobei die eine oder mehreren aktivierenden Gruppen unabhängig aus $-NR_2$, -OR, -O(CO)R, -NR(CO)R, -SR, $-PR_2$, $-C\equiv CR$, $-CR=CR_2$, $-CR_3$ oder $-SiR_3$ ausgewählt sind, wobei die eine oder mehreren aktivierenden Gruppen bevorzugt unabhängig aus $-NR_2$ oder -OR ausgewählt sind, wobei die eine oder mehreren aktivierenden Gruppen bevorzugter -OH sind; wobei R unabhängig aus H oder einer $C_1$- bis $C_{10}$-Hydrocarbylgruppe ausgewählt ist, wobei R bevorzugt unabhängig aus H oder einer $C_1$- bis $C_{10}$-Alkylgruppe ausgewählt ist, wobei R bevorzugter unabhängig aus H oder einer $C_1$- bis $C_6$-Alkylgruppe ausgewählt ist.

**4.** Verfahren nach einem der vorhergehenden Ansprüche, wobei die aromatischen Endgruppen durch eine Ether- oder Esterbindung an das polymere Hydrocarbylrückgrat gebunden sind; wobei das Polymer a) von Schritt i) bevorzugt ein Diphenol-Endgruppen tragendes Polymer mit etherverknüpften Phenolendgruppen ist, und wobei das hydroxysubstituierte Ringatom der Phenolgruppe *ortho-* oder *para-* zu dem Ringatom ist, an das das polymere Rückgrat gebunden ist.

**5.** Verfahren nach einem der vorhergehenden Ansprüche, wobei das Verfahren eine Kondensationsreaktion zwischen b) dem primären oder sekundären Monoamin und/oder einem Polyamin, das primäre und/oder sekundäre Aminogruppen umfasst, und c) dem Aldehyd umfasst, vor der Reaktion mit a) dem polymer mit aromatischen Endgruppen; oder wobei das Verfahren eine Reaktion zwischen a) dem Polymer mit aromatischen Endgruppen und c) dem Aldehyd umfasst, vor der Reaktion mit b) dem primären oder sekundären Monoamin und/oder einem Polyamin, das primäre und/oder sekundäre Aminogruppen umfasst.

**6.** Verfahren nach einem der vorhergehenden Ansprüche, wobei das mindestens eine unsubstituierte Ringatom jeder aromatischen Endgruppe, vor der Reaktion in Schritt ii), *ortho-* oder *para-* zu mindestens einer aktivierenden Gruppe ist; und/oder wobei jede von den aromatischen Endgruppen entweder einen einzelnen Ring oder ein bicyclisches Ringsystem umfasst.

**7.** Verfahren nach einem der Ansprüche 1 bis 6, wobei das Verfahren ferner einen vorhergehenden Epoxid-Fusionsschritt umfasst, in dem ein aromatisches Monomer, das einen Ring umfasst, der mit mindestens einem nukleophilen Substituenten, ausgewählt aus einer Amino-, Hydroxy- oder Thiolgruppe, und mit mindestens einer aktivierenden Gruppe substituiert ist, mit einem Epoxidharz, das epoxidfunktionelle Endgruppen umfasst, in Gegenwart eines Katalysators, bevorzugt eines Tetrabutylphosphoniumbromid-Katalysators, zur Reaktion gebracht wird, um Polymer a) von Schritt i) bereitzustellen, wobei der Ring des aromatischen Monomers bevorzugt Teil eines monocyclischen Ringsystems oder ein Ring eines bicyclischen Ringsystem ist; wobei der mindestens eine nukleophile Substituent bevorzugt eine Hydroxygruppe ist; und wobei das Epoxidharz bevorzugt aus Polyglycidylethern von mehrere Hydroxylgruppen enthaltenden Phenolen, glycidierten polyphenolischen Harzen, Polyglycidylethern von Alkoholen, Glykolen oder Polyglykolen und Polyglycidylestern von Polycarbonsäuren ausgewählt ist, wobei das Epoxidharz bevorzugt aus epoxidierten Novolaken und Bisphenolen (A oder F) oder halogenierten Analoga davon ausgewählt ist; oder
wobei das Verfahren ferner Folgendes umfasst: entweder

einen vorhergehenden Schritt des Durchführens einer Polykondensationsreaktion eines aromatischen Monomers, das einen Ring mit zwei oder mehreren hydroxy-substituierten Ringatomen umfasst, mit einem Aldehyd und/oder Ketonmonomer, um das Polymer a) von Schritt i) bereitzustellen, wobei das Aldehyd bevorzugt aus Formaldehyd, Acetaldehyd, Acrolein, Glyoxal, Benzaldehyd, Naphthaldehyd und Hydroxybenzaldehyd ausgewählt ist, und/oder wobei das Keton aus Cyclohexanon und Acetophenon ausgewählt ist; oder
einen vorhergehenden Schritt des Durchführens einer Reaktion des Vinylpolymerisationstyps mit einem mehrere Hydroxylgruppen enthaltenden Phenol, um das Polymer a) von Schritt i) bereitzustellen.

**8.** Verfahren nach einem der vorhergehenden Ansprüche, wobei b) ein Monoamin ist, das aus Alkylmonoaminen, Alkanolaminen und Poly(alkylenoxid)aminen ausgewählt ist; oder wobei b) ein Polyamin ist, das optional ferner funktionelle Amido- oder Polyamidgruppen umfasst, die aus Adduktion des Polyamins mit einem oder mehreren Epoxiden und/oder Modifikation mit einer oder mehreren Fettsäuren deriviert sind, wobei das Polyamin aus Folgenden ausgewählt ist: 1) einem aliphatischen primären Di- oder Triamin; bevorzugt einem eine Ethergruppe enthaltenden aliphatischen primären Di- oder Triamin; 2) einem aliphatischen sekundären Amino enthaltenden Triamin mit zwei primären aliphatischen Aminogruppen; 3) einem Polyamin mit einer oder zwei sekundären Aminogruppen, bevorzugt Produkten der reduktiven Alkylierung von primären aliphatischen Polyaminen mit Aldehyden oder Ketonen; oder 4) einem aromatischen Polyamin;

wobei, wenn das Polyamin 1) ein aliphatisches primäres Diamin ist, es bevorzugt aus Folgenden ausgewählt ist: 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Nododiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis-(4-aminocyclohexyl)methan (H12-MDA), Bis-(4-amino-3-methylcyclohexyl)methan, Bis-(4-amino-3-ethylcyclohexyl)methan, Bis-(4-amino-3,5-dimethylcyclohexyl)methan, Bis-(4-amino-3-ethyl-5-methylcyclohexyl) methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis-(aminomethyl)cyclohexan, 1,4-Bis-(aminomethyl)cyclohexan, 2,5(2,6)-Bis-(aminomethyl)bicyclo[2.2.1]heptan (NBDA), 3(4),8(9)-Bis-(aminomethyl)tricyclo [5.2.1.0$^{2,6}$]decan, 1,4-Diamino-2,2,6-trimethylcyclohexan (TMCDA), 1,8-Me N-thandiamin, 3,9-Bis-(3-aminopropyl)-2,4,8,10-tetraoxaspiro[5.5]undecan, 1,3-Bis-(aminomethyl)benzol (MXDA), 1,4-Bis-(aminomethyl)benzol und Kombinationen davon;
oder wobei, wenn das Polyamin 1) ein aliphatisches primäres Triamin ist, es bevorzugt aus Folgenden ausgewählt ist: 4-Aminomethyl-1,8-octandiamin, 1,3,5-Tris-(aminomethyl)benzol, 1,3,5-Tris-(aminomethyl)cyclohexan, Tris-(2-aminoethyl)amin, Tris-(2-aminopropyl)amin, Tris-(3-aminopropyl)amin und Kombinationen davon; oder wobei das Polyamin ein eine Ethergruppe enthaltendes aliphatisches primäres Diamin ist, das aus Folgenden ausgewählt ist: Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder Oligomeren von einem der vorhergehenden; Polytetrahydrofurandiaminen, wie etwa Bis-(3-aminopropyl)polytetrahydrofuranen, cycloaliphatischen Diaminen, die Ethergruppen enthalten, bevorzugt deriviert aus Propoxylierung und nachfolgender Aminierung von 1,4-Dimethylolcyclohexan, und Polyoxyalkylendiaminen, wie etwa Polyoxypropylendiaminen, bevorzugt deriviert aus Aminierung von Polyoxyalkylendiolen, und Kombinationen davon;
oder wobei, wenn das Polyamin 1) ein eine Ethergruppe enthaltendes aliphatisches primäres Triamin ist, es bevorzugt aus Polyoxyalkylentriaminen ausgewählt ist, bevorzugt deriviert aus Aminierung von Polyoxyalkylentriolen;
oder wobei, wenn das Polyamin 2) ein aliphatisches sekundäres Amino enthaltendes Triamin mit zwei primären aliphatischen Aminogruppen ist, es bevorzugt aus Folgenden ausgewählt ist: 3-(2-Aminoethyl)aminopropylamin, Bis-(hexamethylen)triamin (BHMT), Diethylentriamin (DETA), Triethylentetramin (TETA), Tetraethylenpentamin (TEPA), Pentaethylenhexamin (PEHA) oder höheren Homologen von linearen Polyethylenaminen wie etwa Polyethylenpolyamin mit 5 bis 7 Ethylenpolyamin-Einheiten (HEPA), Produkten aus der mehrfachen Cyanoethylierung oder Cyanobutylierung und nachfolgenden Hydrierung von primären Polyaminen mit mindestens zwei primären Aminogruppen, wie etwa Dipropylentriamin (DPTA), N-(2-Aminoethyl)-1,3-propandiamin (N3-Amin), N,N'-Bis-(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis-(3-amino-1-ethylpropyl)-2-methyl-1,5-pentandiamin, und Kombinationen davon;
oder wobei, wenn das Polyamin 3) ein Polyamin mit einer oder zwei sekundären Aminogruppen ist, es bevorzugt aus Folgenden ausgewählt ist: $N^1$-Benzyl-1,2-propandiamin, $N^1$-(4-Methoxybenzyl)-1,2-propandiamin, N-Benzyl-1,3-bis-(aminomethyl)benzol, N,N'-Dibenzyl-1,3-bis-(aminomethyl)benzol, N-2-Ethylhexyl-1,3-bis-(aminonyl)benzol, N,N'-Bis-(2-ethylhexyl)-1,3-bis-(aminomethyl)benzol und teilweise styrolisierten Polyaminen, wie etwa teilweise styrolisiertem 1,3-Bis-(aminomethyl)benzol (MXDA) und Kombinationen davon;
oder wobei, wenn das Polyamin 4) ein aromatisches Polyamin ist, es bevorzugt aus Folgenden ausgewählt ist: m- und p-Phenylendiamin, 4,4'-, 2,4'- und/oder 2,2'-Diaminodiphenylmethan, 3,3'-Dichlor-4,4'-diaminodiphenylmethan(MOCA)-diisocyanat, 2,4- und/oder 2,6-Toluoldiamin, Mischungen von 3,5-Dimethylthio-2,4- und -2,6-toluoldiamin, Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichlor-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl(5,5'-methylendithethranilat), 1,3-Propylen-bis-(4-aminobenzoat), 1,4-Butylen-bis-(4-aminobenzoat), Polytetramethylenoxid-bis-(4-aminobenzoat), 1,2-Bis-(2-aminophenylthio)ethan, 2-Methylpropyl-(4-chlor-3,5-diaminobenzoat), t-Butyl-(4-chlor-3,5-diaminobenzoat) und Kombinationen davon.

**9.** Verfahren nach einem der vorhergehenden Ansprüche, wobei das Aldehyd c) die folgende Formel aufweist: $R^5CH=O$, wobei $R^5$ H oder eine $C_1$-$C_8$-Hydrocarbylgruppe ist, wobei das Aldehyd c) bevorzugt aus Formaldehyd, Acetaldehyd, Propionaldehyd, Butylaldehyd, Furfuraldehyd und Benzaldehyd ausgewählt ist, am bevorzugtesten Formaldehyd ist; und/oder wobei die in Schritt ii) erhaltene polymere Mannich-Base wie folgt modifiziert wird: a) durch Adduktion; b) mit einem Beschleuniger, der bevorzugt aus sauren Beschleunigern (wie etwa Salicylsäure), tertiären Aminen und Imidazolen ausgewählt ist; c) mit einem Verdünnungsmittel oder Streckmittel; oder d) durch eine Kondensationsreaktion mit einem Aldehyd und/oder Keton.

**10.** Eine polymere Mannich-Base, die durch das Verfahren nach einem der Ansprüche 1 bis 9 hergestellt wurde oder hergestellt werden kann.

**11.** Eine Epoxidharz-Härterzusammensetzung, die die polymere Mannich-Base nach Anspruch 10 umfasst.

**12.** Ein Verfahren zur Herstellung eines gehärteten Epoxidharzes, wobei das genannte Verfahren Folgendes umfasst:

a) In-Kontakt-Bringen eines Epoxidharzes mit einer polymeren Mannich-Base nach Anspruch 10; und
b) Bilden eines gehärteten Epoxidharzes, wobei das Epoxidharz bevorzugt aus epoxidierten Novolaken und Bisphenolen (A oder F) oder halogenierten Analoga davon ausgewählt ist.

**13.** Ein gehärtetes Epoxidharz, das durch das Verfahren nach Anspruch 12 hergestellt wurde oder hergestellt werden kann.

**14.** Verwendung einer polymeren Mannich-Base nach Anspruch 10 zum Vernetzen eines Epoxidharzes.

**Revendications**

**1.** Procédé de préparation d'une base de Mannich polymère destinée à une utilisation comme durcisseur et/ou accélérateur de résine époxy, ledit procédé comprenant :

i) la fourniture :

a) d'un polymère comprenant des groupes terminaux aromatiques liés par un squelette polymère hydrocarbyle, dans lequel chacun des groupes terminaux aromatiques comprend un cycle substitué par un ou plusieurs groupes d'activation et au moins un atome cyclique non substitué, dans lequel les un ou plusieurs groupes d'activation sont capables d'activer le groupe terminal aromatique pour subir une substitution aromatique électrophile au niveau du au moins un atome cyclique non substitué ; dans lequel les groupes terminaux aromatiques sont liés au squelette polymère hydrocarbyle par un groupe éther, ester, amine, amide, thioéther ou thioester ;
b) une monoamine primaire ou secondaire et/ou une polyamine comprenant des groupes amino primaires et/ou secondaires, et
c) un aldéhyde ; et

ii) la réalisation d'une réaction de Mannich en utilisant les composants a) à c), dans laquelle chaque groupe terminal aromatique du polymère est converti en une base de Mannich.

**2.** Procédé selon la revendication 1, dans lequel chaque groupe terminal du polymère a) comprend une pluralité d'atomes cycliques non substitués et une pluralité de réactions de Mannich se produit sur chaque groupe terminal aromatique à l'étape ii).

**3.** Procédé selon la revendication 1 ou la revendication 2, dans lequel les un ou plusieurs groupes d'activation sont sélectionnés indépendamment parmi $-NR_2$, - OR, -O(CO)R, -NR(CO)R, -SR, $-PR_2$, -C≡CR, $-CR=CR_2$, $-CR_3$, ou $-SiR_3$, préférablement dans lequel les un ou plusieurs groupes d'activation sont sélectionnés indépendamment parmi des groupes $-NR_2$ ou -OR, plus préférablement dans lequel les un ou plusieurs groupes d'activation sont un groupe -OH ; dans lequel R est sélectionné indépendamment parmi un atome d'hydrogène ou un groupe hydrocarbyle $C_1$ à $C_{10}$, préférablement dans lequel R est sélectionné indépendamment parmi un atome d'hydrogène ou un groupe alkyle $C_1$ à $C_{10}$ , plus préférablement dans lequel R est sélectionné indépendamment parmi un atome d'hydrogène ou un groupe alkyle $C_1$ à $C_6$.

**4.** Procédé selon l'une quelconque des revendications précédentes, dans lequel les groupes terminaux aromatiques sont liés au squelette polymère hydrocarbyle par une liaison éther ou ester ; préférablement dans lequel le polymère a) de l'étape i) est un polymère coiffé par des groupes diphénol comportant des groupes phénol terminaux à liaisons éther, et plus préférablement dans lequel l'atome cyclique à substitution hydroxy du groupe phénol est en position *ortho*- ou *para*- par rapport à l'atome cyclique auquel le squelette polymère est lié.

**5.** Procédé selon l'une quelconque des revendications précédentes, le procédé comprenant une réaction de condensation entre b) la monoamine primaire ou secondaire et/ou une polyamine comprenant des groupes amino primaires et/ou secondaires et c) l'aldéhyde, avant une réaction avec a) le polymère comportant des groupes aromatiques terminaux ; ou le procédé comprenant une réaction entre a) le polymère comportant des groupes aromatiques terminaux et c) l'aldéhyde, avant une réaction avec b) la monoamine primaire ou secondaire et/ou une polyamine comprenant des groupes amino primaires et/ou secondaires.

**6.** Procédé selon l'une quelconque des revendications précédentes, dans lequel l'au moins un atome cyclique non substitué de chaque groupe terminal aromatique, avant la réaction à l'étape ii), est en position *ortho*- ou *para*- par rapport à au moins un groupe d'activation ; et/ou dans lequel chacun des groupes terminaux aromatiques comprend soit un cycle unique, soit un système cyclique bicyclique.

**7.** Procédé selon l'une quelconque des revendications 1 à 6, le procédé comprenant en outre une étape préalable de couplage via des groupes époxy, dans laquelle on fait réagir un monomère aromatique comprenant un cycle substitué par au moins un substituant nucléophile sélectionné parmi un groupe amino, hydroxyle ou thiol, et comportant au moins un groupe d'activation, avec une résine époxy comprenant des groupes fonctionnels époxy terminaux en présence d'un catalyseur, préférablement un catalyseur bromure de tétrabutylphosphonium, afin de produire le polymère a) de l'étape i), préférablement dans lequel le cycle du monomère aromatique fait partie d'un système cyclique monocyclique ou d'un cycle d'un système cyclique bicyclique ; préférablement dans lequel l'au moins un substituant nucléophile est un groupe hydroxy ; et préférablement dans lequel la résine époxy est sélectionnée parmi des éthers polyglycidyliques de phénols polyhydriques, des résines polyphénoliques dans lesquelles ont été introduits des groupes glycidyle, des éthers polyglycidyliques d'alcools, de glycols ou de polyglycols, et des esters polyglycidyliques d'acides polycarboxyliques, préférablement dans lequel la résine époxyde est sélectionnée parmi des novolaques et des bisphénols (A ou F) époxydés ou des analogues halogénés de ceux-ci ; ou
le procédé comprenant en outre soit :

une étape préalable consistant à réaliser une réaction de polycondensation d'un monomère aromatique comprenant un cycle comportant deux atomes cycliques à substitution hydroxy ou plus avec un monomère aldéhyde et/ou cétone, afin de produire le polymère a) de l'étape i), préférablement dans lequel l'aldéhyde est sélectionné parmi le formaldéhyde, l'acétaldéhyde, l'acroléine, le glyoxal, le benzaldéhyde, le naphtaldéhyde et l'hydroxybenzaldéhyde et/ou dans lequel la cétone est sélectionnée parmi la cyclohexanone et l'acétophénone ; soit
une étape préalable consistant à réaliser une réaction de type polymérisation vinylique avec un phénol polyhydrique pour produire le polymère a) de l'étape i).

**8.** Procédé selon l'une quelconque des revendications précédentes, dans lequel b) est une monoamine sélectionnée parmi des alkylmonoamines, des alcanolamines et des poly(oxyde d'alkylène)amines ; ou dans lequel b) est une polyamine comprenant optionnellement en outre des groupes fonctionnels amido ou polyamide dérivés par adduction de la polyamine avec un ou plusieurs époxydes et/ou modification avec un ou plusieurs acides gras, dans lequel la polyamine est sélectionnée parmi : 1) une di-ou triamine aliphatique primaire ; préférablement une di- ou triamine aliphatique primaire contenant un groupe éther ; 2) une triamine aliphatique secondaire contenant des groupes amino comportant deux groupes amino aliphatiques primaires ; 3) une polyamine comportant un ou deux groupes amino secondaires, préférablement des produits de l'alkylation réductrice de polyamines aliphatiques primaires avec des aldéhydes ou des cétones ; ou 4) une polyamine aromatique ;

préférablement dans lequel lorsque la polyamine est 1) une diamine aliphatique primaire, elle est sélectionnée parmi : la 2,2-diméthyl-1,3-propanediamine, la 1,3-pentanediamine (DAMP), la 1,5-pentanediamine, le 1,5-diamino-2-méthylpentane (MPMD), la 2-butyl-2-éthyl-1,5-pentanediamine (C11-nododiamine), la 1,6-hexanediamine, la 2,5-diméthyl-1,6-hexanediamine, la 2,2 (4), 4-triméthylhexaméthylènediamine (TMD), la 1,7-heptanediamine, la 1,8-octanediamine, la 1,9-nonanediamine, la 1,10-décanediamine, la 1,11-undécandiamine, la 1,12-dodécanediamine, le 1,2-, 1,3- ou 1,4-diaminocyclohexane, le bis(4-aminocyclohexyl)méthane (H 12-MDA), le bis(4-amino-3-méthylcyclohexyl)méthane, le bis(4-amino-3-éthylcyclohexyl)méthane, le bis(4-amino-3,5-diméthylcyclohexyl)méthane, le bis(4-amino-3-éthyl-5-méthylcyclohexyl)méthane, le 1-amino-3-aminométhyl-3,5,5-triméthylcyclohexane (isophoronediamine ou IPDA), le 2- ou 4-méthyl-1,3-diaminocyclohexane ou des mélanges de celui-ci, le 1,3-bis(aminométhyl)cyclohexane, le 1,4-bis(aminométhyl)cyclohexane, le 2,5 (2,6)-bis(aminométhyl)bicyclo[2.2.1]heptane (NBDA), le 3(4), 8(9)-bis(aminométhyl)tricyclo[5.2.1.0$^{2,6}$]décane, le 1,4-diamino-2,2,6-triméthylcyclohexane (TMCDA), la 1,8-Me N-thandiamine, le 3,9-bis(3-aminopropyl)-2,4,8,10-tétraoxaspiro[5.5]undécane, le 1,3-bis(aminométhyl)benzène (MXDA), le 1,4-bis(aminométhyl) benzène, et des combinaisons de ceux-ci ;
ou préférablement dans lequel lorsque la polyamine est 1) une triamine aliphatique primaire, elle est sélectionnée parmi la 4-aminométhyl-1,8-octanediamine, le 1,3,5-tris(aminométhyl)benzène, le 1,3,5-tris(aminométhyl)cyclohexane, la tris(2-aminoéthyl)amine, la tris(2-amino-propyl)amine, la tris(3-aminopropyl)amine et des combinaisons de ceux-ci ; ou dans lequel la polyamine est une diamine aliphatique primaire contenant un groupe éther sélectionnée parmi : le bis(2-aminoéthyl)éther, la 3,6-dioxaoctane-1,8-diamine, la 4,7-dioxadécane-1,10-diamine, la 4,7-dioxadécane-2,9-diamine, la 4,9-dioxadodécane-1,12-diamine, la 5,8-dioxadodécane-3,10-diamine, la 4,7,10-trioxatridécan-1,13-diamine, ou des oligomères de l'un quelconque des éléments susmentionnés ; des polytétrahydrofurandiamines, telles que les bis(3-aminopropyl)polytétrahydrofuranes, des diamines cycloaliphatiques contenant des groupes éther préférablement dérivées par propoxylation et amination ultérieure de 1,4-diméthylolcyclohexane, et des polyoxyalkylènediamines, telles que les polyoxypropylènediamines, préférablement dérivées par amination de polyoxyalkylènediols, et des combinaisons de ceux-ci ;

ou préférablement dans lequel lorsque la polyamine est 1) une triamine aliphatique primaire contenant un groupe éther, elle est sélectionnée parmi des polyoxyalkylènetriamines, préférablement dérivées par amination de polyoxyalkylènetriols ;
ou préférablement dans lequel lorsque la polyamine est 2) une triamine aliphatique secondaire contenant des groupes amino comportant deux groupes amino aliphatiques primaires, elle est sélectionnée parmi : la 3-(2-aminoéthyl)aminopropylamine, la bis(hexaméthylène)triamine (BHMT), la diéthylènetriamine (DETA), la triéthylènetétramine (TETA), la tétraéthylènepentamine (TEPA), la pentaéthylènehexamine (PEHA) ou des homologues supérieurs de polyéthylèneamines linéaires telles que la polyéthylènepolyamine comportant 5 à 7 unités éthylènepolyamine (HEPA), des produits de la cyanoéthylation ou cyanobutylation multiple et de l'hydrogénation ultérieure de polyamines primaires comportant au moins deux groupes amino primaires, telles que la dipropylènetriamine (DPTA), la N-(2-aminoéthyl)-1,3-propanediamine (N3-amine), la N,N'-bis(3-aminopropyl)éthylènediamine (N4-amine), le N,N'-bis(3-aminopropyl)-1,4-diaminobutane, la N5-(3-aminopropyl)-2-méthyl-1,5-pentanediamine, la N3-(3-aminopentyl)-1,3-pentanediamine, la N5-(3-amino-1-éthyl-propyl)-2-méthyl-1,5-pentanediamine, la N,N'-bis(3-amino-1-éthyl-propyl)-2-méthyl-1,5-pentanediamine, et des combinaisons de ceux-ci ;
ou préférablement dans lequel lorsque la polyamine est 3) une polyamine comportant un ou deux groupes amino secondaires, elle est sélectionnée parmi : la N'-benzyl-1,2-propanediamine, la N'-(4-méthoxybenzyl)-1,2-propanediamine, le N-benzyl-1,3-bis(aminométhyl)benzène, le N,N'-dibenzyl-1,3-bis(aminométhyl)benzène, le N-2-éthylhexyl-1,3-bis(aminonyl)benzène, le N,N'-bis(2-éthylhexyl)-1,3-bis(aminométhyl)benzène, et des polyamines partiellement styrénées, telles que le 1,3-bis(aminométhyl)benzène partiellement styréné (MXDA), et des combinaisons de ceux-ci ;
ou préférablement dans lequel lorsque la polyamine est 4) une polyamine aromatique, elle est sélectionnée parmi les m- et p-phénylènediamines, le 4,4'-, 2,4'- et/ou 2,2'-diaminodiphénylméthane, le diisocyanate de 3,3'-dichloro-4,4'-diaminodiphénylméthane (MOCA), la 2,4- et/ou 2,6-toluènediamine, des mélanges de 3,5-diméthylthio-2,4- et -2,6-toluènediamine, des mélanges de 3,5-diéthyl, -2,4- et -2,6-toluylènediamine (DETDA), le 3,3',5,5'-tétraéthyl-4,4'-diaminodiphénylméthane (M-DEA), le 3,3',5,5'-tétraéthyl-2,2'-dichloro-4,4'-diaminodiphénylméthane (M-CDEA), le 3,3'-diisopropyl-5,5'-diméthyl-4,4'-diaminodiphénylméthane (M-MIPA), le 3,3',5,5'-tétraisopropyl-4,4'-diaminodiphénylméthane (M-DIPA), la 4,4'-diaminodiphénylsulfone (DDS), le 4-amino-N-(4-aminophényl)benzènesulfonamide, l'acide 5,5'-méthylènedianthranilique, le diméthyl(5,5'-méthylènedithéthranilate), le 1,3-propylène-bis(4-aminobenzoate), le 1,4-butylène-bis(4-aminobenzoate), le polytétraméthylèneoxyde-bis(4-aminobenzoate), le 1,2-bis(2-aminophénylthio)éthane, le 2-méthylpropyl(4-chloro-3,5-diaminobenzoate), le t-butyl(4-chloro-3,5-diaminobenzoate), et des combinaisons de ceux-ci.

**9.** Procédé selon l'une quelconque des revendications précédentes, dans lequel l'aldéhyde c) a la formule : $R^5CH=O$, dans laquelle $R^5$ est un atome d'hydrogène ou un groupe hydrocarbyle $C_1$-$C_8$, préférablement dans laquelle l'aldéhyde c) est sélectionné parmi le formaldéhyde, l'acétaldéhyde, le propionaldéhyde, le butylaldéhyde, le furfuraldéhyde et le benzaldéhyde, idéalement le formaldéhyde ; et/ou dans lequel la base de Mannich polymère obtenue à l'étape ii) est modifiée : a) par adduction ; b) avec un accélérateur, préférablement sélectionné parmi des accélérateurs acides (tels que l'acide salicylique), des amines tertiaires et des imidazoles ; c) avec un diluant ou un adjuvant ; ou d) par une réaction de condensation avec un aldéhyde et/ou une cétone.

**10.** Base de Mannich polymère préparée, ou pouvant être préparée, par le procédé selon l'une quelconque des revendications 1 à 9.

**11.** Composition de durcissement de résine époxy comprenant la base de Mannich polymère telle que définie dans la revendication 10.

**12.** Procédé de préparation d'une résine époxy durcie, ledit procédé comprenant :

a) la mise en contact d'une résine époxy avec une base de Mannich polymère telle que définie dans la revendication 10 ; et
b) la formation d'une résine époxy durcie, la résine époxy étant préférablement sélectionnée parmi des novolaques et des bisphénols (A ou F) époxydés ou des analogues halogénés de ceux-ci.

**13.** Résine époxy durcie préparée, ou pouvant être préparée, par le procédé selon la revendication 12.

**14.** Utilisation d'une base de Mannich polymère telle que définie dans la revendication 10 pour la réticulation d'une résine époxy.

Figure 1

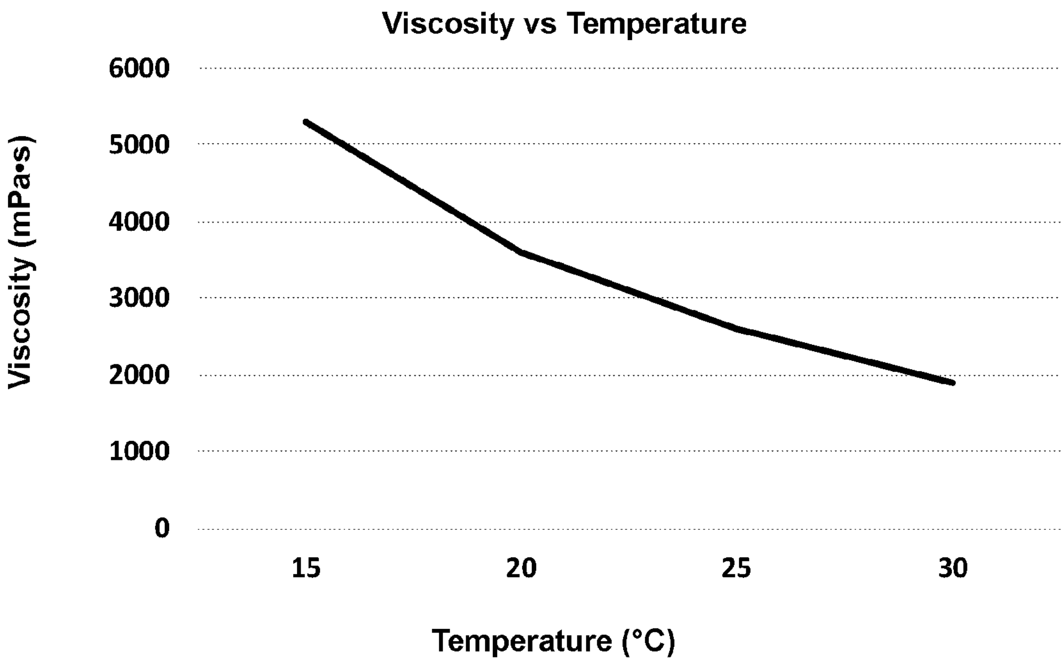


Figure 2

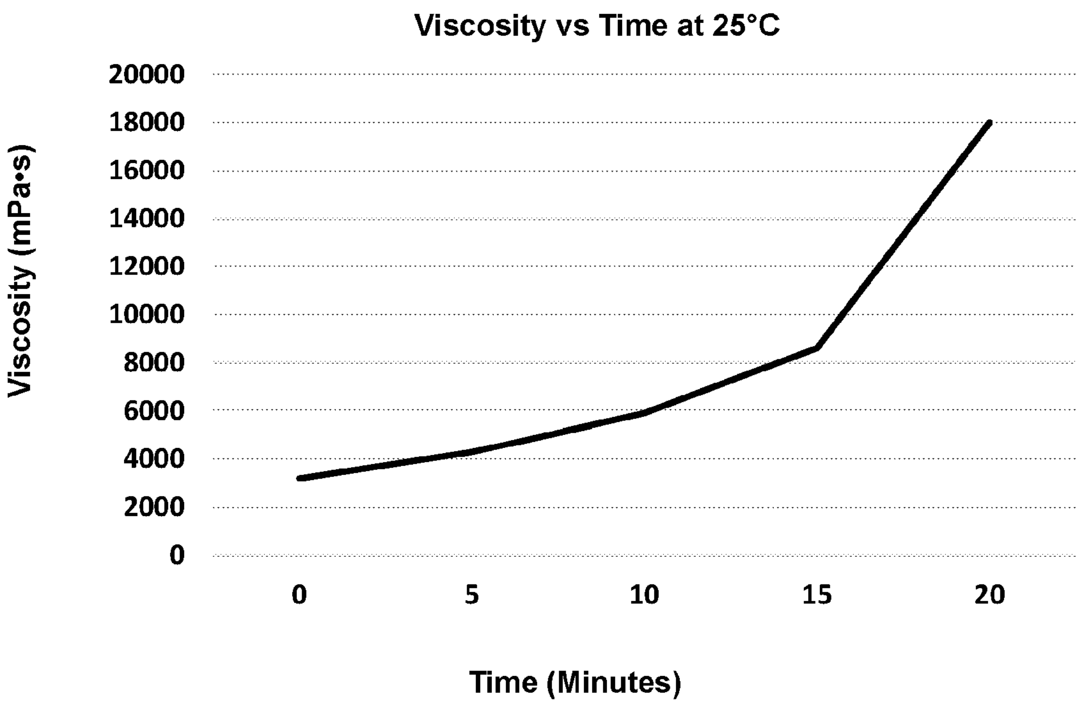

Figure 3

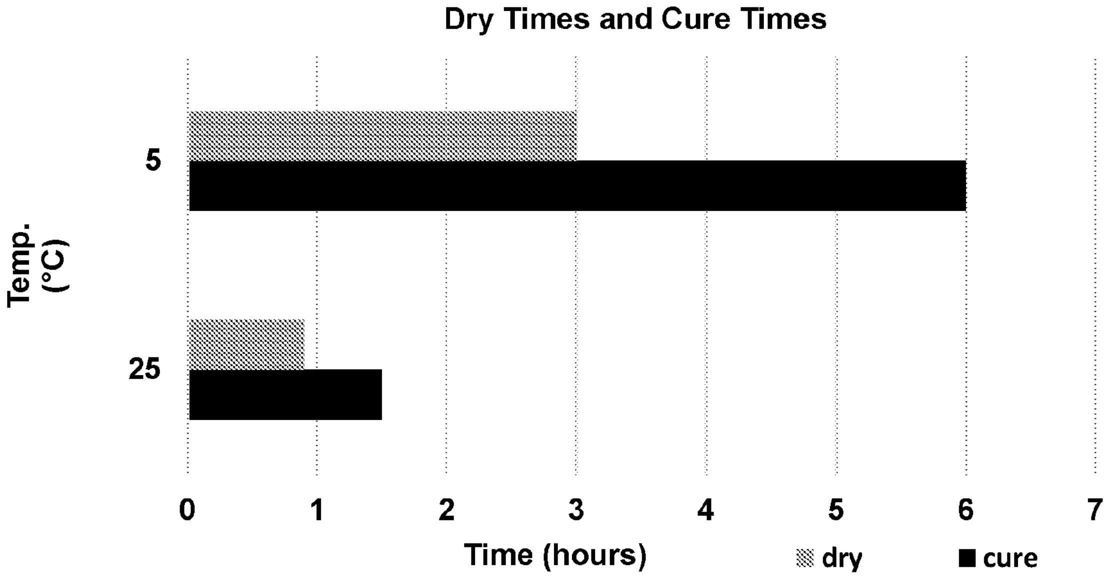


Figure 4

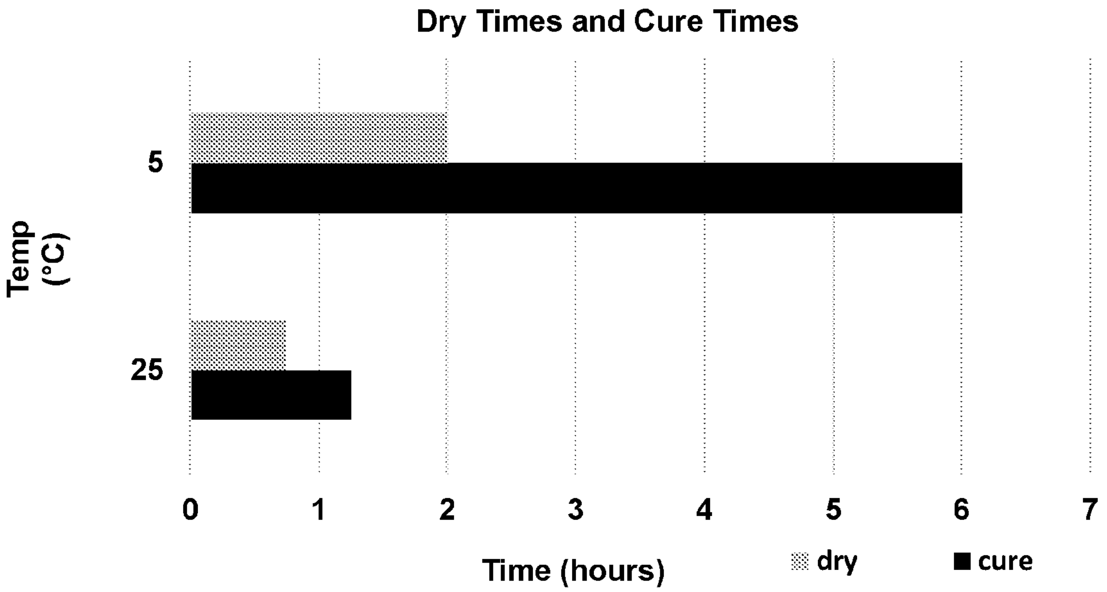

Figure 5

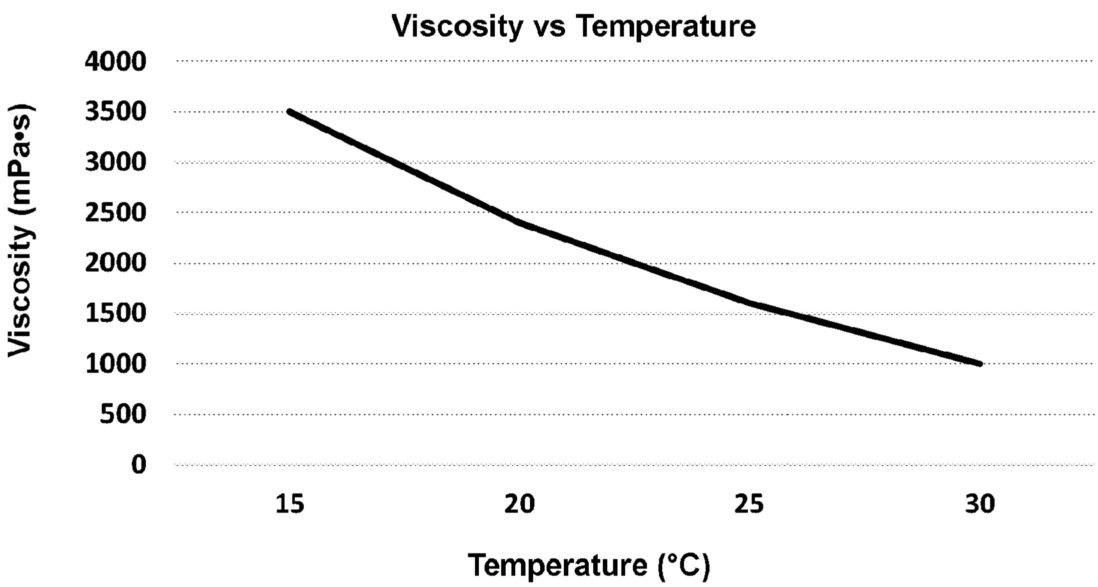
Viscosity vs Temperature
4000
3500
3000
2500
2000
1500
1000
500
0
Viscosity (mPa•s)
15
20
25
30
Temperature (°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0779311 A
- US 6248182 B
- US 5639396 A
- US 4599371 A


### Non-patent literature cited in the description


- **LIN, J.-J.** ; **LIN, S.-F.** ; **KUO, T.-T.** ; **CHANG, F.-C.** ; **TSENG, F.-P.** Synthesis and epoxy curing of Mannich bases derived from bisphenol A and poly(oxyalkylene)diamine. *J. Appl. Polym. Sci.*, 2000, vol. 78, 615-623
- **HANSCH. C** ; **LEO. A**. Substituent constants for correlation analysis in chemistry and biology. Wiley, 1979
- **HAMMETT. P**. The Effect of Structure upon the Reactions of Organic Compounds. Benzene Derivatives. *J. Am. Chem. Soc.*, 1937, vol. 59 (1), 96-103
- **HANSCH. C et al.** A Survey of Hammett Substituent Constants and Resonance and Field Parameters. *Chem. Rev.*, 1991, vol. 91, 165-195
- **HAMMETT. P**. The Effect of Structure upon the Reactions of Organic Compounds. *Benzene Derivatives, J. Am. Chem. Soc.*, 1937, vol. 59 (1), 96-103